# EUROPEAN PATENT SPECIFICATION

(11) **EP 4 550 116 B1**
(45) Date of publication and mention of the grant of the patent: **17.06.2026**
(21) Application number: 24206417.8
(22) Date of filing: 14.10.2024
(51) Int. Cl.: G06F 8/33, G06F 8/73

(54) **PLC PROGRAM GENERATOR/COPILOT USING GENERATIVE AI**
PLC PROGRAMMGENERATOR/COPILOT MIT GENERATIVER KI
GÉNÉRATEUR/COPILOTE DE PROGRAMME PLC UTILISANT UNE IA GÉNÉRATIVE

(30) Priority: 03.11.2023 US 202363595798 P; 09.02.2024 US 202418437941
(43) Date of publication of application: 07.05.2025
(73) Proprietor: Rockwell Automation Technologies, Inc., Mayfield Heights, OH 44124 (US)
(72) Inventor: Maturana, Francisco P., Mayfield Heights, OH 44124 (US); He, Meiling, Mayfield Heights, OH 44124 (US); Chowdhury, Ankan, Mayfield Heights, OH 44124 (US); da Silva, Aderiano M., Mayfield Heights, OH 44124 (US)
(74) Representative: Grünecker Patent- und Rechtsanwälte PartG mbB

(56) References cited:
- BOUDRIBILA ABDERRAHMANE ET AL: "Large Language Models and Adversarial Reinforcement Learning to Automate PLCs Programming: A Preliminary Investigation", 2023 9TH INTERNATIONAL CONFERENCE ON CONTROL, DECISION AND INFORMATION TECHNOLOGIES (CODIT), IEEE, 3 July 2023 (2023-07-03), pages 650 - 655, XP034452930, DOI: 10.1109/CODIT58514.2023.10284185
- ANONYMOUS: "Large language model - Wikipedia", 22 June 2023 (2023-06-22), XP093213769, Retrieved from the Internet <URL:https://en.wikipedia.org/w/index.php?title=Large_language_model&oldid=1161462207> [retrieved on 20250228]
- LEWIS PATRICK ET AL: "Retrieval-Augmented Generation for Knowledge-Intensive NLP Tasks", 12 April 2021 (2021-04-12) - 28 February 2025 (2025-02-28), XP093174360, Retrieved from the Internet <URL:https://arxiv.org/pdf/2005.11401> [retrieved on 20250228]
- MACNEIL STEPHEN ET AL: "Experiences from Using Code Explanations Generated by Large Language Models in a Web Software Development E-Book", PROCEEDINGS OF THE 25TH INTERNATIONAL CONFERENCE ON MODEL DRIVEN ENGINEERING LANGUAGES AND SYSTEMS: COMPANTION PROCEEDINGS, ACMPUB27, NEW YORK, NY, USA, 2 March 2023 (2023-03-02), pages 931 - 937, XP059308896, ISBN: 978-1-4503-9470-3, DOI: 10.1145/3545945.3569785
- JIN DUN ET AL: "Automatically Generating Code Comment Using Heterogeneous Graph Neural Networks", 2022 IEEE INTERNATIONAL CONFERENCE ON SOFTWARE ANALYSIS, EVOLUTION AND REENGINEERING (SANER), IEEE, 15 March 2022 (2022-03-15), pages 1078 - 1088, XP034153341, DOI: 10.1109/SANER53432.2022.00125
- SHUYAN ZHOU ET AL: "DocPrompting: Generating Code by Retrieving the Docs", ARXIV.ORG, CORNELL UNIVERSITY LIBRARY, 201 OLIN LIBRARY CORNELL UNIVERSITY ITHACA, NY 14853, 5 October 2022 (2022-10-05), XP091335110
- FENGJI ZHANG ET AL: "RepoCoder: Repository-Level Code Completion Through Iterative Retrieval and Generation", ARXIV.ORG, CORNELL UNIVERSITY LIBRARY, 201 OLIN LIBRARY CORNELL UNIVERSITY ITHACA, NY 14853, 20 October 2023 (2023-10-20), XP091639594
- MD RIZWAN PARVEZ ET AL: "Retrieval Augmented Code Generation and Summarization", ARXIV.ORG, CORNELL UNIVERSITY LIBRARY, 201 OLIN LIBRARY CORNELL UNIVERSITY ITHACA, NY 14853, 10 September 2021 (2021-09-10), XP091050262
- DONG LI ET AL: "Generation-Augmented Query Expansion For Code Retrieval", ARXIV.ORG, CORNELL UNIVERSITY LIBRARY, 201 OLIN LIBRARY CORNELL UNIVERSITY ITHACA, NY 14853, 20 December 2022 (2022-12-20), XP091399091

## Description

### CROSS-REFERENCE TO RELATED APPLICATIONS

This application claims priority to U.S. Provisional Application Serial No. 63/595,798, filed on November 3, 2023, and entitled "PLC PROGRAM GENERATOR/COPILOT USING GENERATIVE AI".

### TECHNICAL FIELD

The subject matter disclosed herein relates generally to industrial automation systems, and, for example, to industrial programming development platforms

### BACKGROUND ART

The conventional approach to configuring and programming industrial devices to carry out prescribed manufacturing processes requires not only specialized knowledge of the programming languages and device configuration settings used to configure the devices, but also an expert understanding of industrial control process in general, including knowledge of common industrial standards and specifics of various types of automation applications. This restricts the development of industrial control projects to those engineers having the required level of specialist knowledge, and also extends the time required to develop industrial control solutions.

### BRIEF DESCRIPTION

The subject-matter for which protection is sought is defined by the appended claims. The following presents a simplified summary in order to provide a basic understanding of some aspects described herein. This summary is not an extensive overview nor is it intended to identify key/critical elements or to delineate the scope of the various aspects described herein. Its sole purpose is to present some concepts in a simplified form as a prelude to the more detailed description that is presented later.

In one or more embodiments, a system is provided, comprising a user interface component configured to receive, as natural language input, a prompt specifying industrial control code design requirements; and an artificial intelligence (AI) component configured to generate, using a generative AI model, industrial control code inferred to satisfy the industrial control code design requirements based on analysis of the prompt, sample control code store in a code repository, and text-based documents stored in a document repository, wherein the AI component is further configured to embed functional documentation in the industrial control code based on the prompt, the text-based documents, and the control code samples.

Also, one or more embodiments provide a method, comprising receiving, by an industrial integrated development environment (IDE) system comprising a processor, a prompt requesting industrial control code that performs a specified control function, wherein the prompt is formatted as a natural language input; and generating, by the industrial IDE system using a generative artificial intelligence (AI) model, the industrial control code based on analysis of the prompt, sample control code store in a code repository, and text-based documents stored in a document repository.

Also, according to one or more embodiments, a non-transitory computer-readable medium is provided having stored thereon instructions that, in response to execution, cause an industrial integrated development environment (IDE) to perform operations, the operations comprising receiving a prompt requesting industrial control code that performs a specified control function, wherein the prompt is formatted as a natural language input; and generating, using a generative artificial intelligence (AI) model, the industrial control code based on analysis of the prompt, sample control code store in a code repository, and text-based documents stored in a document repository.

To the accomplishment of the foregoing and related ends, certain illustrative aspects are described herein in connection with the following description and the annexed drawings. These aspects are indicative of various ways which can be practiced, all of which are intended to be covered herein. Other advantages and novel features may become apparent from the following detailed description when considered in conjunction with the drawings.
Boudribila Abderrahmane et al: "Large Language Models and Adversarial Reinforcement Learning to Automate PLCs Programming: A Preliminary Investigation", 2023 9TH International Conference on Control, Decision and Information Technologies (CODIT), IEEE, 3 July 2023, pages 650-655, [retrieved on 2023-10-24] discloses a novel pipeline that relies solely on Artificial Intelligence (Al)-techniques, namely, Reinforcement Learning (RL) and Natural Language Processing (NLP) techniques, including Named Entity Recognition (NER) and Large Language Models (LLMs). The potential of the proposed pipeline uses the recent ChatGPT model by making a sample dataset in this context and generating Structured Text code from specifications presented in a natural language format.
Anonymous: "Large language model-Wikipedia", 22 June 2023, Retrieved from the Internet: URL:https://en.wikipedia.org/w/index.php?title=Large_language model&oldid=116146220 discloses a computerized language model consisting of an artificial neural network with many parameters (tens of millions to billions), trained on large quantities of unlabeled text using self-supervised learning or semi-supervised learning
Lewis Patrick et al: "Retrieval-Augmented Generation for Knowledge-Intensive NLP Tasks", 12 April 2021, Retrieved from the Internet: URL:https://arxiv.org/pdf/2005.11401 discloses RAG models where the parametric memory is a pre-trained seq2seq model and the non-parametric memory is a dense vector index of Wikipedia, accessed with a pre-trained neural retriever. The authors compare two RAG formulations, one which conditions on the same retrieved passages across the whole generated sequence, and another which can use different passages per token. They fine-tune and evaluate their models on a wide range of knowledge intensive NLP tasks and set the state of the art on three open domain QA tasks, outperforming parametric seq2seq models and task-specific retrieve-and-extract architectures.
Macneil Stephen et al: "Experiences from Using Code Explanations Generated by Large Language Models in a Web Software Development E-Book", Proceedings of the 25th International Conference on Model Driven Engineering Languages and Systems: Compantion Proceedings, ACMPUB27, NEW YORK, NY, USA, 2 March 2023, pages 931-937, discloses natural language processing which have resulted in large language models (LLMs) that can generate code and code explanations. The authors report on their experiences generating multiple code explanation types using LLMs and integrating them into an interactive e-book on web software development.
Jin Dun et al: "Automatically Generating Code Comment Using Heterogeneous Graph Neural Networks", 2022 IEEE International Conference on Software Analysis, Evolution and Reengineering (SANER), IEEE, 15 March 2022, pages 1078-1088, [retrieved on 2022-07-21] discloses code summarization which aims to generate readable summaries that describe the functionality of source code pieces. The main purpose of the code summarization is to help software developers understand the code and save their precious time. However, since programming languages are highly structured, it is challenging to generate high-quality code summaries. For this reason, this paper proposes a new approach named CCHG to automatically generate code comments.
Shuyan Zhou et al: "DocPrompting: Generating Code by Retrieving the Docs", ARXIV.ORG, Cornell University Library, 201 OLIN Library Cornell University ITHACA, NY 14853, 5 October 2022, discloses a natural-language-to-code generation approach that explicitly leverages code documentation by retrieving the relevant documentation pieces given a natural language (NL) intent, and generating code based on the NL intent and the retrieved documentation.
Fengji Zhang et al: "RepoCoder: Repository-Level Code Completion through Iterative Retrieval and Generation", ARXIV.ORG, Cornell University Library, 201 OLIN Library Cornell University ITHACA, NY 14853, 20 October 2023, discloses a task of repository-level code completion that continues writing the unfinished code based on a broader context of the repository. RepoCoder streamlines the repository level code completion process by incorporating a similarity-based retriever and a pre-trained code language model in an iterative retrieval generation pipeline. RepoCoder makes effective utilization of repository-level information for code completion and has the ability to generate code at various levels of granularity.
Md Rizwan Parvez et al: "Retrieval Augmented Code Generation and Summarization", ARXIV.ORG, Cornell University Library, 201 OLIN Library Cornell University ITHACA, NY 14853, 10 September 2021,discloses a retrieval augmented framework, REDCODER, that retrieves relevant code or summaries from a retrieval database and provides them as a supplement to code generation or summarization models.
Dong Li et al: "Generation-Augmented Query Expansion For Code Retrieval", ARXIV.ORG, Cornell University Library, 201 OLIN Library Cornell University ITHACA, NY 14853, 20 December 2022, discloses a generation-augmented query expansion framework. Inspired by the human retrieval process-sketching an answer before searching, in this work, they authors utilize the powerful code generation model to benefit the code retrieval task.
In light of the prior art it is, therefore, the object of the present invention to provide an efficient method for obtaining industrial control code.

### BRIEF DESCRIPTION OF THE DRAWINGS

FIG. 1 is a block diagram of an example industrial control environment.
FIG. 2 is a block diagram of an example integrated development environment (IDE) system.
FIG. 3 is a diagram illustrating example data flows associated with creation of a system project for an automation system being designed using the IDE system.
FIG. 4 is a diagram illustrating commissioning of a system project.
FIG. 5 is a diagram illustrating another view of the general architecture of the industrial IDE system.
FIG. 6 is an example user interface display that can be generated by the IDE system and used to select a portal to which a query or request will be submitted.
FIG. 7 is a diagram illustrating a general document search that can be performed on a document repository by industrial IDE system.
FIG. 8 is a diagram illustrating generation of control code by IDE system's generative AI component.
FIG. 9 is an example user interface that can be generated by the IDE system when the user invokes the code generation portal.
FIG. 10 is a diagram illustrating a contextualization process in which the IDE system's generative AI component converts code stored in the code repository into documentation that is then stored in the document repository.
FIG. 11 is a diagram illustrating digitization from the document repository 34 to the code repository.
FIG. 12 is an example user interface that can be generated when the user invokes the prompt engineering services of the IDE system.
FIG. 13 is an example view of the user interface that is invoked when the user selects the prompt recommendation interface from the selection buttons.
FIG. 14 is an example prompt repository user interface that renders the content of a prompt repository.
FIG. 15 is an example view of the user interface that is invoked when the user selects an automated parameter tuning interface.
FIG. 16a is a flowchart of a first part of an example methodology for using generative AI to generate industrial control code.
FIG. 16b is a flowchart of a second part of the example methodology for using generative AI to generate industrial control code.
FIG. 17 is a flowchart of an example methodology for synchronizing a document repository and a code repository used by a generative AI-enabled industrial IDE system by digitizing documents in the document repository into control code samples.
FIG. 18 is a flowchart of an example methodology for synchronizing a document repository and a code repository used by a generative AI-enabled industrial IDE system by contextualizing control code in the code repository into documentation for storage in the document repository.
FIG. 19a is a flowchart of a first part of an example methodology for automatically tuning hyperparameters for a generative AI model used by an industrial IDE system for generating control code from natural language inputs.
FIG. 19b is a flowchart of a second part of the example methodology for automatically tuning hyperparameters for a generative AI model used by an industrial IDE system for generating control code from natural language inputs.
FIG. 20 is an example computing environment.
FIG. 21 is an example networking environment.

### DETAILED DESCRIPTION

The subject disclosure is now described with reference to the drawings, wherein like reference numerals are used to refer to like elements throughout. In the following description, for purposes of explanation, numerous specific details are set forth in order to provide a thorough understanding thereof. It may be evident, however, that the subject disclosure can be practiced without these specific details. In other instances, well-known structures and devices are shown in block diagram form in order to facilitate a description thereof.

As used in this application, the terms "component," "system," "platform," "layer," "controller," "terminal," "station," "node," "interface" are intended to refer to a computer-related entity or an entity related to, or that is part of, an operational apparatus with one or more specific functionalities, wherein such entities can be either hardware, a combination of hardware and software, software, or software in execution. For example, a component can be, but is not limited to being, a process running on a processor, a processor, a hard disk drive, multiple storage drives (of optical or magnetic storage medium) including affixed (e.g., screwed or bolted) or removable affixed solid-state storage drives; an object; an executable; a thread of execution; a computer-executable program, and/or a computer. By way of illustration, both an application running on a server and the server can be a component. One or more components can reside within a process and/or thread of execution, and a component can be localized on one computer and/or distributed between two or more computers. Also, components as described herein can execute from various computer readable storage media having various data structures stored thereon. The components may communicate via local and/or remote processes such as in accordance with a signal having one or more data packets (e.g., data from one component interacting with another component in a local system, distributed system, and/or across a network such as the Internet with other systems via the signal). As another example, a component can be an apparatus with specific functionality provided by mechanical parts operated by electric or electronic circuitry which is operated by a software or a firmware application executed by a processor, wherein the processor can be internal or external to the apparatus and executes at least a part of the software or firmware application. As yet another example, a component can be an apparatus that provides specific functionality through electronic components without mechanical parts, the electronic components can include a processor therein to execute software or firmware that provides at least in part the functionality of the electronic components. As further yet another example, interface(s) can include input/output (I/O) components as well as associated processor, application, or Application Programming Interface (API) components. While the foregoing examples are directed to aspects of a component, the exemplified aspects or features also apply to a system, platform, interface, layer, controller, terminal, and the like.

As used herein, the terms "to infer" and "inference" refer generally to the process of reasoning about or inferring states of the system, environment, and/or user from a set of observations as captured via events and/or data. Inference can be employed to identify a specific context or action, or can generate a probability distribution over states, for example. The inference can be probabilistic-that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources.

In addition, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form.

Furthermore, the term "set" as employed herein excludes the empty set; e.g., the set with no elements therein. Thus, a "set" in the subject disclosure includes one or more elements or entities. As an illustration, a set of controllers includes one or more controllers; a set of data resources includes one or more data resources; etc. Likewise, the term "group" as utilized herein refers to a collection of one or more entities; e.g., a group of nodes refers to one or more nodes.

Various aspects or features will be presented in terms of systems that may include a number of devices, components, modules, and the like. It is to be understood and appreciated that the various systems may include additional devices, components, modules, etc. and/or may not include all of the devices, components, modules etc. discussed in connection with the figures. A combination of these approaches also can be used.

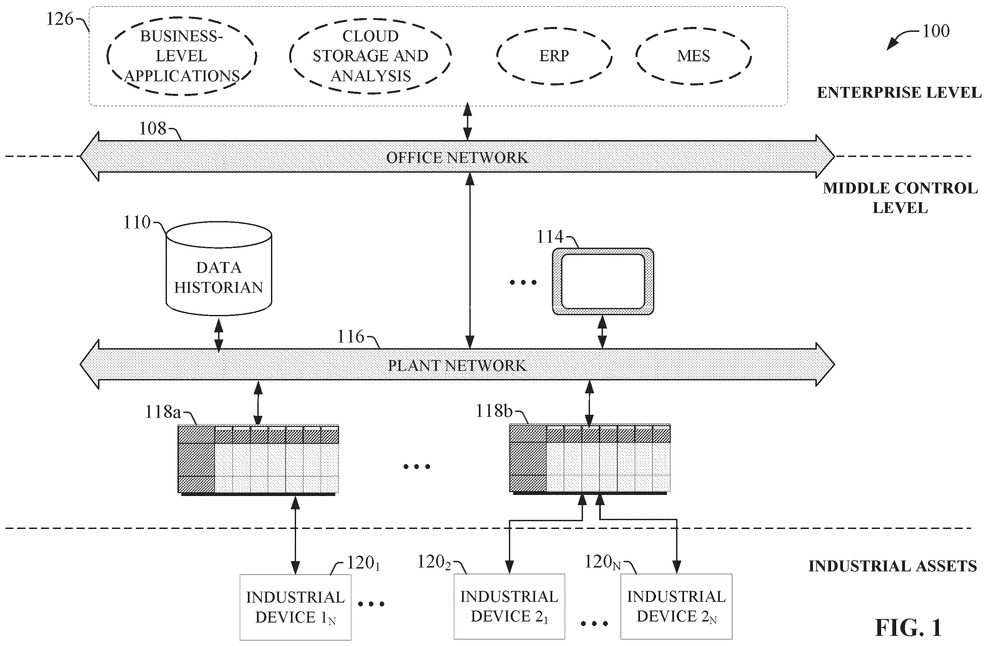

FIG. 1 is a block diagram of an example industrial control environment 100. In this example, a number of industrial controllers 118 are deployed throughout an industrial plant environment to monitor and control respective industrial systems or processes relating to product manufacture, machining, motion control, batch processing, material handling, or other such industrial functions. Industrial controllers 118 typically execute respective control programs to facilitate monitoring and control of industrial devices 120 making up the controlled industrial assets or systems (e.g., industrial machines). One or more industrial controllers 118 may also comprise a soft controller executed on a personal computer or other hardware platform, or on a cloud platform. Some hybrid devices may also combine controller functionality with other functions (e.g., visualization). The control programs executed by industrial controllers 118 can comprise substantially any type of control code capable of processing input signals read from the industrial devices 120 and controlling output signals generated by the industrial controllers 118, including but not limited to ladder logic, sequential function charts, function block diagrams, or structured text.

Industrial devices 120 may include both input devices that provide data relating to the controlled industrial systems to the industrial controllers 118, and output devices that respond to control signals generated by the industrial controllers 118 to control aspects of the industrial systems. Example input devices can include telemetry devices (e.g., temperature sensors, flow meters, level sensors, pressure sensors, etc.), present sensing devices (e.g., inductive or capacitive proximity sensors, photoelectric sensors, ultrasonic sensors, etc.), manual operator control devices (e.g., push buttons, selector switches, etc.), safety monitoring devices (e.g., safety mats, safety pull cords, light curtains, etc.), and other such devices. Output devices may include motor drives, pneumatic actuators, signaling devices, robot controllers, valves, pumps, and the like.

Industrial controllers 118 may communicatively interface with industrial devices 120 over hardwired or networked connections. For example, industrial controllers 118 can be equipped with native hardwired inputs and outputs that communicate with the industrial devices 120 to effect control of the devices. The native controller I/O can include digital I/O that transmits and receives discrete voltage signals to and from the field devices, or analog I/O that transmits and receives analog voltage or current signals to and from the devices. The controller I/O can communicate with a controller's processor over a backplane such that the digital and analog signals can be read into and controlled by the control programs. Industrial controllers 118 can also communicate with industrial devices 120 over a network using, for example, a communication module or an integrated networking port. Exemplary networks can include the Internet, intranets, Ethernet, DeviceNet, ControlNet, Data Highway and Data Highway Plus (DH/DH+), Remote I/O, Fieldbus, Modbus, Profibus, wireless networks, serial protocols, and the like. The industrial controllers 118 can also store persisted data values that can be referenced by their associated control programs and used for control decisions, including but not limited to measured or calculated values representing operational states of a controlled machine or process (e.g., tank levels, positions, alarms, etc.) or captured time series data that is collected during operation of the automation system (e.g., status information for multiple points in time, diagnostic occurrences, etc.). Similarly, some intelligent devices - including but not limited to motor drives, instruments, or condition monitoring modules - may store data values that are used for control and/or to visualize states of operation. Such devices may also capture time-series data or events on a log for later retrieval and viewing.

Industrial automation systems often include one or more human-machine interfaces (HMIs) 114 that allow plant personnel to view telemetry and status data associated with the automation systems, and to control some aspects of system operation. HMIs 114 may communicate with one or more of the industrial controllers 118 over a plant network 116, and exchange data with the industrial controllers to facilitate visualization of information relating to the controlled industrial processes on one or more pre-developed operator interface screens. HMIs 114 can also be configured to allow operators to submit data to specified data tags or memory addresses of the industrial controllers 118, thereby providing a means for operators to issue commands to the controlled systems (e.g., cycle start commands, device actuation commands, etc.), to modify setpoint values, etc. HMIs 114 can generate one or more display screens through which the operator interacts with the industrial controllers 118, and thereby with the controlled processes and/or systems. Example display screens can visualize present states of industrial systems or their associated devices using graphical representations of the processes that display metered or calculated values, employ color or position animations based on state, render alarm notifications, or employ other such techniques for presenting relevant data to the operator. Data presented in this manner is read from industrial controllers 118 by HMIs 114 and presented on one or more of the display screens according to display formats chosen by the HMI developer. HMIs may comprise fixed location or mobile devices with either user-installed or pre-installed operating systems, and either user-installed or pre-installed graphical application software.

Some industrial environments may also include other systems or devices relating to specific aspects of the controlled industrial systems. These may include, for example, a data historian 110 that aggregates and stores production information collected from the industrial controllers 118 or other data sources, device documentation stores containing electronic documentation for the various industrial devices making up the controlled industrial systems, inventory tracking systems, work order management systems, repositories for machine or process drawings and documentation, vendor product documentation storage, vendor knowledgebases, internal knowledgebases, work scheduling applications, or other such systems, some or all of which may reside on an office network 108 of the industrial environment.

Higher-level systems 126 may carry out functions that are less directly related to control of the industrial automation systems on the plant floor, and instead are directed to long term planning, high-level supervisory control, analytics, reporting, or other such high-level functions. These systems 126 may reside on the office network 108 at an external location relative to the plant facility, or on a cloud platform with access to the office and/or plant networks. Higher-level systems 126 may include, but are not limited to, cloud storage and analysis systems, big data analysis systems, manufacturing execution systems, data lakes, reporting systems, etc. In some scenarios, applications running at these higher levels of the enterprise may be configured to analyze control system operational data, and the results of this analysis may be fed back to an operator at the control system or directly to a controller 118 or device 120 in the control system.

Industrial controllers 1118 are traditionally programmed manual by a controls engineer, a process prone to error and inefficiencies, and requiring multidisciplinary expertise. The process of optimizing and debugging industrial control code is a time-consuming and laborious task, often requiring the developer to consult relevant user manuals to obtain answers to programming questions. Moreover, best practices for control programming require the developer to add embedded documentation throughout the control program in the form of natural language comments and descriptions, so that other engineers can easily identify the functionalities associated with respective sections of the control code.

The conventional approach to configuring and programming industrial devices to carry out prescribed manufacturing processes requires not only specialized knowledge of the programming languages and device configuration settings used to configure the devices, but also an expert understanding of industrial control process in general, including knowledge of common industrial standards and specifics of various types of automation applications. This restricts the development of industrial control projects to those engineers having the required level of specialist knowledge, and also extends the time required to develop industrial control solutions. Moreover, even when industrial devices are programmed by experienced engineers, the resulting program may still require significant debugging and validations before the program can be safety executed to control an automation system. This debugging and validation process is a time-consuming task and often requires involvement of the physical machine for testing and debugging, which can delay system deployment.

To address at least some of these or other issues, one or more embodiments described herein provide an industrial integrated development environment (IDE) system for designing, programming, and configuring aspects of an industrial automation system using generative artificial intelligence (AI) techniques. Embodiments of the industrial IDE can make use of a generative AI model and associated neural networks to generate portions of an industrial automation project in accordance with specified functional requirements, which can be provided to the industrial IDE system via natural language prompts (spoken or written).

In one or more embodiments the IDE system's control programming development interface can include an integrated control programming copilot that uses generative AI to prompt the user for functional requirements of the automation system being designed, and to generate documented control code or instructions that satisfy these functional requirements. This generative AI copilot can generate control code (e.g., ladder logic programs, structured text, etc.) for execution on industrial controllers based on natural language inputs prompted from the user, reducing programming errors and saving time relative to fully manual programming. The copilot can also assist the user in selecting or creating program instructions or functions that encode desired control or computational functionality, aiding in program optimization and debugging. The copilot can also assist in defining and creating input and output variables for program instructions or functions (such as add-on instructions or other such functions), setting parameter values, and defining data types for variables.

The IDE system can maintain and access a document repository and a control code repository in connection with generating control code for the user's control application. The document repository can store device or software manuals, program instruction manuals, functional specification documents, or other technical documents. The control code repository can store sample control code segments generated by an administrator of the IDE system or submitted by industrial customers or device vendors. The copilot's generative AI functions can extract portions of document text from the document repository and translate this text into control code for storage in the code repository, and can also contextualize control code from the code repository into text-based documentation for storage in the document repository. The copilot's generative AI model accesses information in both repositories in connection with generating control code based on the user's natural language prompts, from which the IDE system determines the functional requirements of the control application for which the control code is being generated. The IDE system's generative AI capabilities can also streamline the task of documenting control code by generating and embedding documentation and comments into the control code (e.g., ladder logic rung comments, variable names, etc.).

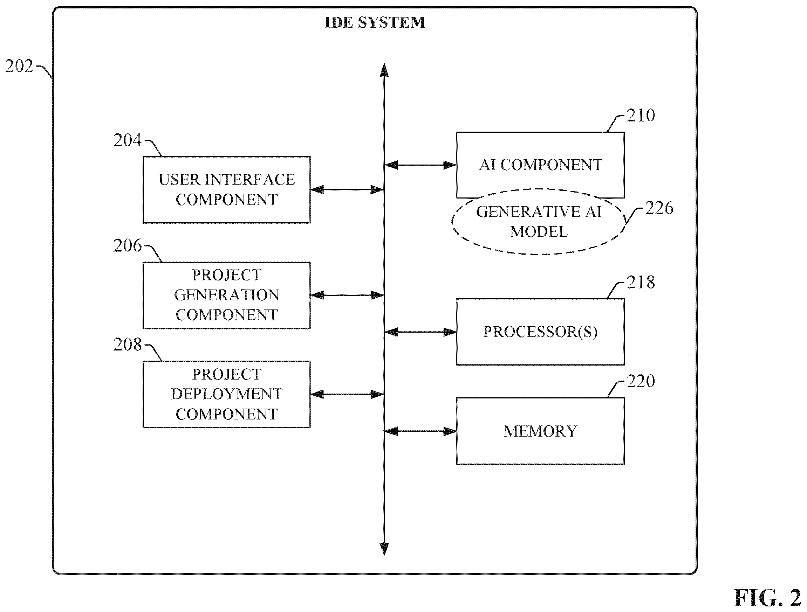

FIG. 2 is a block diagram of an example integrated development environment (IDE) system 202 according to one or more embodiments of this disclosure. Aspects of the systems, apparatuses, or processes explained in this disclosure can constitute machine-executable components embodied within machine(s), e.g., embodied in one or more computer-readable mediums (or media) associated with one or more machines. Such components, when executed by one or more machines, e.g., computer(s), computing device(s), automation device(s), virtual machine(s), etc., can cause the machine(s) to perform the operations described.

IDE system 202 can include a user interface component 204, a project generation component 206, a project deployment component 208, an AI component 210, one or more processors 218, and memory 220. In various embodiments, one or more of the user interface component 204, project generation component 206, project deployment component 208, AI component 210, the one or more processors 218, and memory 220 can be electrically and/or communicatively coupled to one another to perform one or more of the functions of the IDE system 202. In some embodiments, components 204, 206, 208, and 210 can comprise software instructions stored on memory 220 and executed by processor(s) 218. IDE system 202 may also interact with other hardware and/or software components not depicted in FIG. 2. For example, processor(s) 218 may interact with one or more external user interface devices, such as a keyboard, a mouse, a display monitor, a touchscreen, or other such interface devices.

User interface component 204 can be configured to receive user input and to render output to the user in any suitable format (e.g., visual, audio, tactile, etc.). In some embodiments, user interface component 204 can be configured to communicatively interface with an IDE client that executes on a client device (e.g., a laptop computer, tablet computer, smart phone, etc.) that is communicatively connected to the IDE system 202 (e.g., via a hardwired or wireless connection). The user interface component 204 can then receive user input data and render output data via the IDE client. In other embodiments, user interface component 204 can be configured to generate and serve interface screens to a client device (e.g., program development screens), and exchange data via these interface screens. Input data that can be received via various embodiments of user interface component 204 can include, but is not limited to, natural language inputs describing the functional requirements of an industrial control system, programming code, manually written control programming, parameter values, or other such input. Output data rendered by various embodiments of user interface component 204 can include natural language responses to user prompts as part of a chat-based interaction, control code, programming feedback (e.g., error and highlighting, coding suggestions, etc.), programming and visualization development screens, or other such outputs.

Project generation component 206 can be configured to create a system project comprising one or more project files based on design input received via the user interface component 204, assisted by application of generative AI. Project deployment component 208 can be configured to commission the system project created by the project generation component 206 to appropriate industrial devices (e.g., controllers, HMI terminals, motor drives, AR/VR systems, etc.) for execution.

AI component 210 can be configured to assist the project generation component 206 in generating portions of the system project - e.g., industrial control code, device configuration settings, input and output variables, etc. - using generative AI. To this end, the AI component 210 can leverage a generative AI model 226 and associated neural networks in connection with prompting a designer for information that can be used to accurately ascertain the functional requirements for the industrial control system being designed, and generating control code or AOIs to align with the functional requirements gleaned from the designer's input. The AI component 210 can reference information contained in documentation and control code repositories in connection with generating control code, and can also synchronize between the two repositories by translating document text into control code, and translating control code samples into text-based documentation.

The one or more processors 218 can perform one or more of the functions described herein with reference to the systems and/or methods disclosed. Memory 220 can be a computer-readable storage medium storing computer-executable instructions and/or information for performing the functions described herein with reference to the systems and/or methods disclosed.

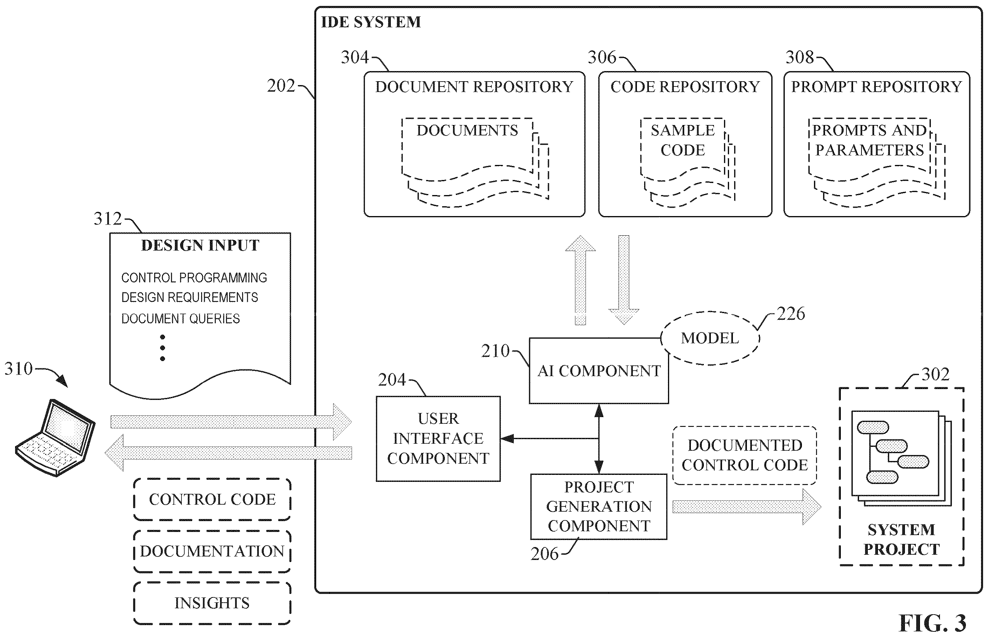

FIG. 3 is a diagram illustrating example data flows associated with creation of a system project 302 for an automation system being designed using IDE system 202 according to one or more embodiments. Some embodiments of the IDE system 202 can be implemented on a cloud platform and made accessible to multiple industrial customers having authorized access to use the IDE system's services. Cloud-based implementations can also facilitate collaborative project development whereby multiple developers contribute design and programming input to a common automation system project. Alternatively, some embodiments of IDE system 202 may execute at least partially on a local client device while accessing remote services and repositories - such as document repository 304, code repository 306, and prompt repository 308 - as needed.

A client device 310 (e.g., a laptop computer, tablet computer, desktop computer, mobile device, wearable AR/VR appliance, etc.) owned by a user with suitable authentication credentials can access the IDE system's project development tools and leverage these tools to create a system project 302 - including industrial control code, device configuration settings, or other such aspects of an industrial control project - for an automation system being developed. Through interaction with development interfaces generated by the system's user interface component 204, developers can submit design input 312 to the IDE system 202 in various supported formats. Design input 312 can comprise explicit control code entered by the user (e.g., control logic, structured text, sequential function charts, etc.) as well as device configuration parameter definitions to be downloaded to a corresponding device, such as an industrial controller 118.

Additionally, the IDE system's development services can include a control code generation copilot that leverages generative AI to assist the user in creating control code for an industrial application, as well as to search for answers to specific questions relating to the development of the control program. This copilot can include an AI component 210 that prompts the user for other types of design input 312 that can be used to determine the functional specifications or design goals for the automation system for which the system project 302 is being developed, and generates portions of the system project 302 to align with these design goals using generative AI techniques. This type of design input 512 can include, but is not limited to, descriptions of the functional specifications submitted as natural language prompts to by the AI component 210. The IDE system 202 can assist the user in creating and submitting prompts designed to yield accurate control code by drawing from pre-written prompts that are stored in a prompt repository 308 along with their corresponding outputs and parameters. As will be described in more detail herein, AI component 210 can also access a document repository 304 and a code repository 306 in connection with generating documented control code that aligns with the user's design input 312. The AI component 210 can also access these repositories 304, 306 in connection with retrieving documentation or generating insights in response to questions or search queries submitted by the user.

Based on the user's design input 312, user interface component 204 can render design feedback designed to assist the developer in connection with developing a system project 302 for configuration and control of an industrial automation system. At least some of this design feedback can comprise prompts generated by the AI component 210 requesting specific items of information that can be used to generate portions of the system project 302. These generative AI features will be described in more detail herein.

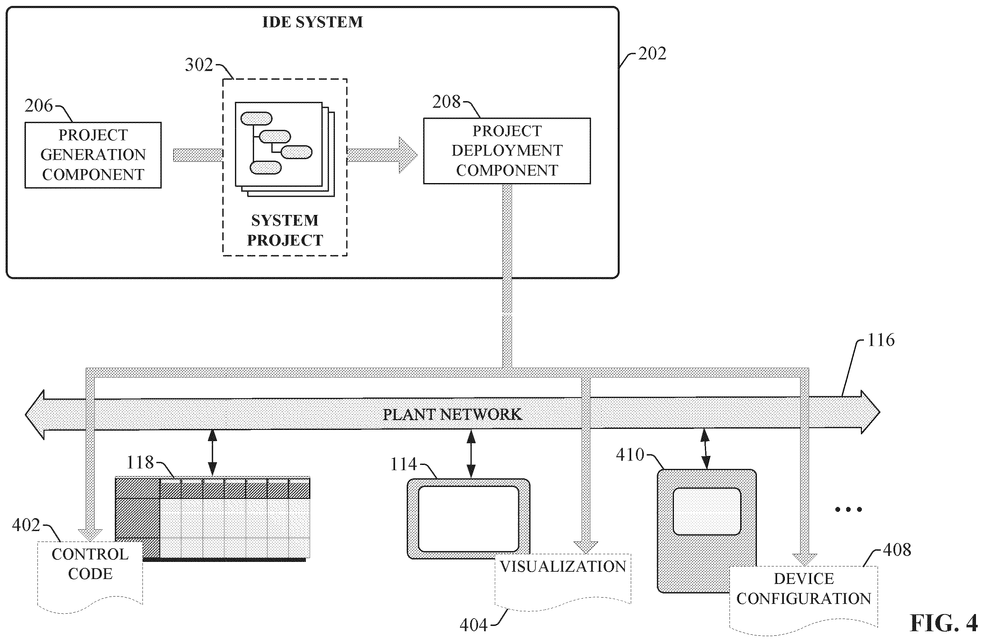

When a fully developed system project 302 for an automation system has been completed, the system project 302 can be deployed to one or more target control devices for execution. FIG. 4 is a diagram illustrating commissioning of a system project 302. Project deployment component 208 can compile or otherwise translate a completed system project 302 into one or more executable files or configuration files that can be stored and executed on respective target industrial devices of the automation system (e.g., industrial controllers 118, HMI terminals 114 or other types of visualization systems, industrial devices 410 such as motor drives, telemetry devices, vision systems, safety relays, etc.).

As noted above, system project 302 may comprise one or more of control code, device parameter definitions, or other such control project elements. Upon completion of project development, a user can identify which target devices - including an industrial controller 118, an HMI terminal 114, or another type of industrial device 410 - are to execute or receive these respective aspects of the system project 302. Project deployment component 208 can then translate controller code defined by the system project 302 to a control program file 402 formatted for execution on the specified industrial controller 118 and send this control program file 402 to the controller 118 (e.g., via plant network 116). Similarly, project deployment component 208 can deploy any visualization definitions or device parameter definitions or settings to a visualization application 404 or device configuration data 408, respectively, and deploy these files to their respective target devices for execution and/or device configuration.

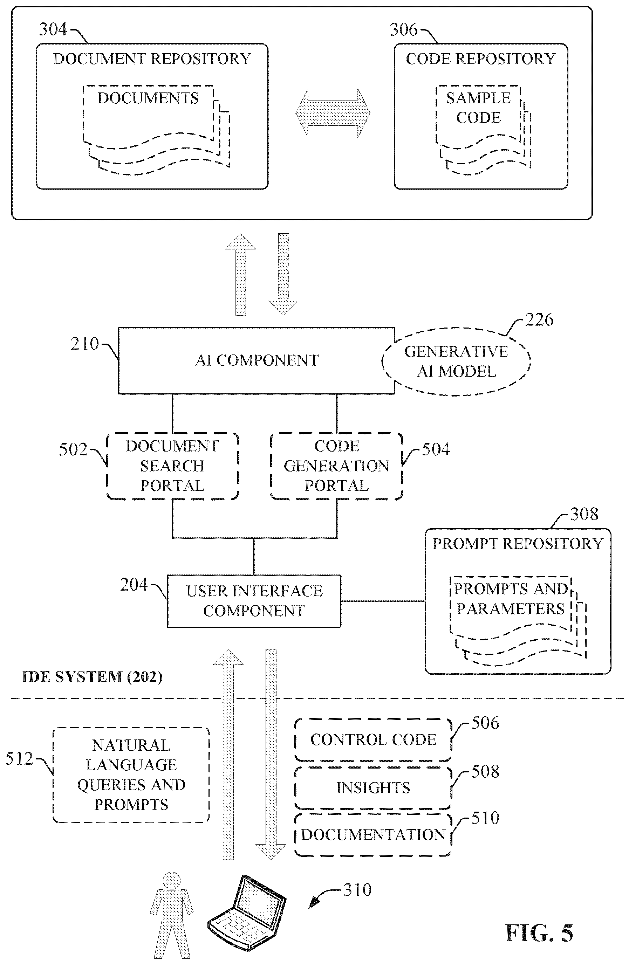

FIG. 5 is a diagram illustrating another view of the general architecture of the industrial IDE system 202. As noted above, embodiments of the industrial IDE system 202 can use generative AI techniques to assist a developer in generating documented industrial control code in a selected format, including but not limited to ladder logic, structured text, or add-on instructions (AOIs). This generative AI assistance can include both automated generation of the control code itself, as well as producing answers to specific programming questions submitted by the user. To this end, in addition to rendering development interfaces that allow a developer to create portions of a control program (e.g., a system project 302) by entering explicit control code, the IDE system 202 can include an integrated control programming copilot that leverages generative AI to aid the developer in generating and documenting the control code. The programming copilot can include an AI component 210 that uses an associated generative AI model 226 to generate control code 506 for execution on industrial controllers 118 based on functional specifications submitted to the system 202 as natural language queries and prompts 512, as well as to generate and present insights 508 or answers to questions based on information contained in the document repository 304. The AI component 210 can also generate any documentation 510 relevant to the user's request, including embedded program comments and documentation embedded in the generated control code 506.

Generative AI model 226 can generate new content relating to an industrial control project based on analysis of various types of design input 312 (including natural queries and prompt), pre-written control code samples stored in the code repository 306, known industrial or customer-specific control standards, or other such information. In various embodiments, the model 226 can be any of a diffusion model, a variational autoencoder (VAE), a generative adversarial network (GAN), a language-based generative model such as a large language model (LLM), a generative pre-trained transformer (GPT), a long short-term memory (LSTM) network, or other such models. The model 226 can be trained for specific use in generating industrial control code (e.g., ladder logic, sequential function charts, structured text, function block diagrams, industrial domain-specific language, etc.) and device configuration data for an industrial control project being developed using the system 202.

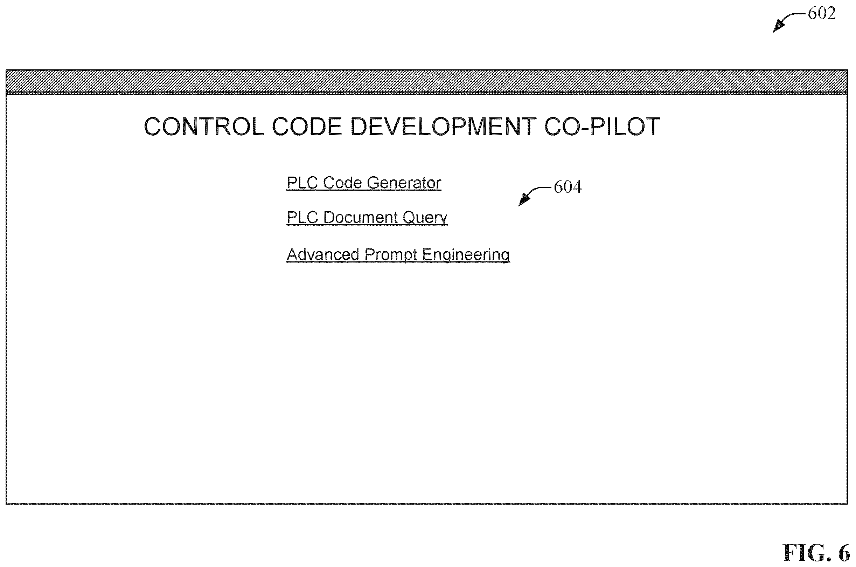

The IDE system's user interface component 204 can allow users to submit natural language queries and requests to the generative AI services via either of a document search portal 502 or a code generation portal 504. FIG. 6 is an example user interface display 602 that can be generated by the user interface component 204 and used to select a portal 502, 504 to which a query or request will be submitted. Display 602 renders selectable links 604 for navigating to the document search portal 502 ("PLC Document Query") and the code generation portal ("PLC Code Generation"), as well as for navigating to an advanced prompt engineering interface to be described in more detail herein.

Returning to FIG. 5, the document search portal 502 allows the user to query the document repository 304 for answers to a question regarding the programming task. The document repository 304 can be a cloud-based storage platform that serves as a centralized repository for such documents as programming manuals, industrial device manuals, functional specification documents, documentation of the sample code 306, or other such documents. For multi-tenant embodiments in which the IDE system 202 is accessible to multiple customers, the IDE system 202 can maintain multiple versions of the document repository 304 that are specific to respective customer entities, and that are accessible only to their corresponding customers. Each customer-specific document repository 304 can contain both globally accessible technical documents (e.g., language-specific programming or instruction manuals, user manuals for industrial devices, etc.) as well as customer-specific documentation such as plant-specific functional specifications for respective machines or automation systems, plant-specific programming or control standards, preferred code documentation standards, or other such documents.

In some embodiments, the user interface component 204 can render, as part of the documents search portal 502, a document submission interface that allows a user associated with a customer entity to submit documents to the document repository 304. Documents can be submitted in substantially any format, including but not limited to word processing documents or portable document format (PDF) documents. When a document is submitted for storage in the document repository 304, the AI component 210 can perform pre-processing on the document to format the document for embedded searching. For example, in the case of a PDF document, the AI component 210 can first convert the PDF document to text data and store the result as an embedded document. Documents can be stored in the document repository 304 together with associated metadata about the document, including but not limited to the document's title and author, and a link to the document if stored remotely. In some embodiments, the AI component 210 can also generate, as metadata for a document, a general insight about the document inferred to be relevant to control code developers.

In some cases, document repository 304 can also store control code documentation that is embedded in any of the sample code stored in the code repository 306. In such cases, a control code sample stored in the code repository 306 can be linked or associated with its corresponding documentation stored in the document repository 304, such that a search for the code sample (e.g., a search performed by the generative AI model 226 or another entity) causes both the code and its corresponding documentation to be returned or provided together, even though both are stored in separate repositories.

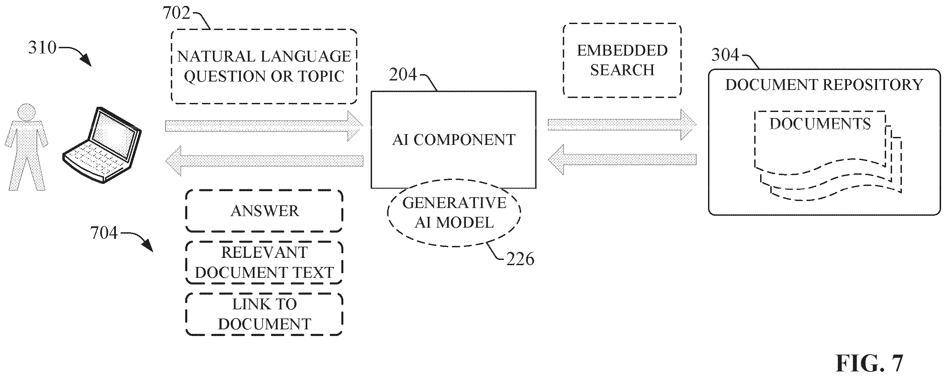

FIG. 7 is a diagram illustrating a general document search that can be performed on the document repository 304 by the generative AI component 204. In response to selection of the link to the document search portal 502 (e.g., the link on interface display 602), the user interface component 204 (not shown in FIG. 7) can render a document search display that allows the user to enter a natural language question 702 or general search topic directed to the document repository 304. The question 702 can relate to a control programming problem encountered by the user in connection with developing a control program. For example, the user may be unfamiliar with the suite of ladder logic instruction blocks that are available for selection and inclusion in a ladder logic control program, and may wish to know which instruction blocks should be used to carry out a specified function. The user can submit this question via the user interface component 204 as a natural language input; e.g., "What instruction should I used to examine a bit for an ON condition, then latch it to ON, then an OFF condition, then immediately update the outputs?" In another example, the user may submit a question 702 regarding a preferred or standard coding format for a specified control function, or other such questions relevant to industrial control code development.

In response to receipt of the user's question 702, AI component 210 can perform an embedded search of the processed documents in the document repository 304 (e.g., using an LLM search), and generate a response 704 to the question 702 based on selected content contained in the document repository 304 that is deemed relevant to the question 702. The response 704 can be formatted as a natural language answer to the user's question 702. For example, in response to the example question quoted above, the AI component 210 can generate the answer "To Examine a bit for an ON condition, use the XIC instruction. Then, to latch it to ON, use the OTL instruction. For examining an OFF condition, use the XIO instruction, finally, to immediately update the outputs, use the IOT instruction." The AI component 210, using the generative AI model 226 can generate this response based on information deemed relevant to the question 702 obtained from instruction set reference manuals stored on the document repository 304. Depending on the level of specificity required to answer the question 702, the AI component 210 can also include recommended parameter settings for the recommended instructions. In addition to providing a natural language answer to the question 702, the response can also include relevant excerpts from the stored documents that served as bases for the answer, as well as links to copies of the full documents, which can be used to render digital copies of the documents in their entirety.

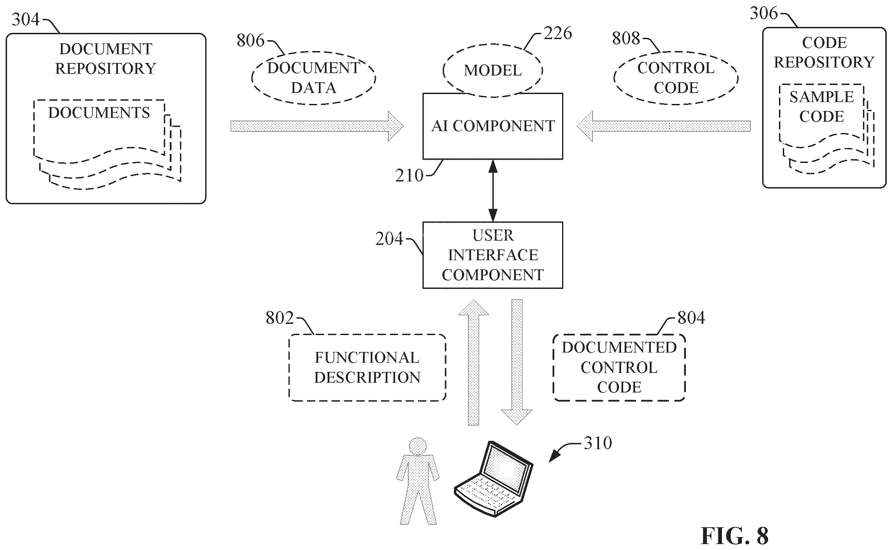

The code generation portal 504 of the code generation copilot can be invoked by selecting the appropriate link 604 on display 602, and can assist the user in generating control code for an industrial automation system or control application using the generative AI model 226. FIG. 8 is a diagram illustrating generation of control code 804 by the AI component 210. As noted above, the code generation portal 504 can supplement a primary control code development interface - which allows a user to develop industrial control code using manually entered control programming - with enhanced features that generate at least portions of the control code using generative AI. When the user invokes the code generation portal 504, the user interface component 204 can render, on the user's client device 310, a code generation interface that allows the user to enter, as a natural language input, functional descriptions 802 of the control code or add-on instruction to be generated. Based on these functional descriptions 802, the generative AI model 226 can identify control code samples 808 stored within the code repository 306 that can be used as a basis for generating customized control code 804 capable of carrying out the functional requirements inferred from the natural language descriptions 802. The AI component 210 can also identify any text-based document data 806 contained within the document repository 304 that may assist the generative AI model 226 in generating control code 804 that accurately aligns with the functional requirements, or that can be used by the model 226 to generate embedded program comments or documentation within the control code 804.

The code repository 306 can store sample code segments in various control programming formats (e.g., ladder logic, structured text, AOIs, etc.) for a variety of types of industrial control functions or applications. The sample code segments can comprise pre-tested code developed and submitted to the code repository 306 by device or software vendors (e.g., vendors of industrial controllers 118 or control program development platforms, including the IDE system 202 itself) for use with their devices. In some embodiments, end users of the system 202 can also submit pre-tested code samples to the code repository 306. In such embodiments, the end users can select whether to store their submitted code in an open section of the code repository 306, making their submitted code sample globally accessible to other registered users of the system 202 (that is, accessible to the generative AI model 226 in connection with processing prompts from other users), or whether the submitted code sample is to be stored as proprietary code in a private section of the code repository 306 assigned to the customer entity, making the code accessible only to the customer entity that submitted the code sample. Proprietary control code that users may wish to submit to their private sections of the code repository 306 may conform to the customer's preferred in-house coding practices and standards, ensuring that control code 804 generated by the generative AI model 266 based on these code samples conform to the customer's preferred coding practices. By affording customers access to private sections of the code repository 306 and document repository 304 in which to store proprietary code and documentation, the system 202 allows users to customize the content used by the generative AI model 226 to generate control code and insights. When a prompt 512 is received from a user associated with the customer entity, the AI component 210 can process the prompt 512 based on both the open content of the repositories 304, 306 as well as the proprietary content stored in the private sections of the repositories 304, 306 allocated to the customer entity.

The stored sample code can encompass a range of code modules or AOIs suitable for monitoring and controlling various types of automation systems, or for carrying out different types of industrial applications or control functions (e.g., sheet metal stamping for manufacturing automotive components, lot traceability control, batch control applications for the food and drug industry, material handling applications, robot control applications, etc.). The AI component 210 can train the generative AI model 226 using the code samples stored in the code repository 306 to respond to user's natural language requests with suitably structured control code 804 that meets the technical requirements of the user's functional description 802.

In general, the AI component 210 can generate control code 804 that satisfies the user's functional description 802 based on a combination of pre-defined control code 808 determined to be relevant to the functional description 802, as well as application of generative AI that customizes or modifies the relevant control 808 in accordance with the requirements of the functional description 802. The AI component 210 can also use the generative AI model 226 to embed documentation or comments within the generated code 804. This embedded documentation can include, for example, natural language descriptions of the functions of respective portions of the control code (e.g., ladder logic rung comments), names of variables used in the control code 804 (e.g., a description of the variable's function, or the metric represented by the variable's value), instructions for using the code 804, or other such documentation. The AI component 210 can generate at least some of the embedded documentation based on natural language functional descriptions 802 that were submitted by the user and used to generate the code 804, appending portions of the user's descriptions 802 - or modified variations of those descriptions - into the code 804 where appropriate.

Over time, the system 202 can add new content to the repositories 304 and 306, including adding new code samples, functional descriptions 802 submitted by users, and the resulting documented control code 804 that was generated based on those descriptions 802. These various types of data can be stored in the repositories 304 and 306 so that, when users submit queries or descriptions 802 similar to previously submitted descriptions, the model 226 will recognize these similarities and generate code 804 having a high confidence of accuracy based on the code 804 that was generated for previous similar descriptions 802. The AI component 210 can also use this training to infer and render recommended next words for a user's functional description 802 or prompt as the user is entering the description based on a trained LSTM model.

In general, historical data, including prompts and the corresponding code generated by the generative AI model 226, can be configured by users and added to the code repository 306. Users can then utilize the system's embedded search function, powered by generative AI, to recommend prompts determined to be most similar to results being sought, comparing the user's prompts with stored prompts. Subsequently, code corresponding to the stored prompts determined to be most similar or related to the user's prompts or descriptions are leveraged in the user interface for reference.

In addition to assisting with development of a new control code for a system project 302, some embodiments of the IDE system 202 can also use generative AI techniques to analyze or optimize existing or pre-written control code submitted to the system 202 by the user. In some scenarios, control code to be analyzed by the IDE system 202 can comprise code that was developed within the development platform of the IDE system 202 itself. Alternatively, control code that was developed using another development platform can be imported into the IDE system 202 for analysis. In either case, the AI component 210 use the model 226 to identify portions of the code that can be modified to improve one or more performance or programming metrics of the code, and generate a rewritten version of the code that implements these modifications. For example, the AI component 210 can rewrite the code to reduce the overall amount of code without substantively altering the code's functionality, reduce the number or distance of machine movements (and thus the amount of machine wear) used to carry out a control function, implement consistency in variable naming conventions, reduce the processing time required to perform a control function, reduce the total number of variables used in the code, eliminate redundant control or programmatic tasks, improve organization of the program, or implement other such improvements. The AI component 210 can also add documentation to the code in the form of line, rung, or routine comments; variable names; or other such documentation. As in the case of generative AI-assisted code generation, the system 202 can leverage the content of the document repository 304 and code repository 306 in connection with optimizing and documenting code submitted by the user.

In some embodiments, the AI component 210 can also be used to generate test code for performing regression tests on control code that was developed by other systems (such as manually developed code that was created using another development platform). As part of conventional control system development, test scripts are often written to test and debug control code. For example, if control code for a pump or other type of industrial asset is added to a project, a test script may be written to inject test data representing various scenarios or conditions into the control code and assess the response. This code testing approach can be costly in terms of man-hours, since a team of people may be required to manage this manual testing and debugging and to run through all possible testing scenarios. To address this, users can submit control code to be tested, and the generative AI model 226 can generate suitable regression test programs that can be executed against the control code to validate the code's functionality.

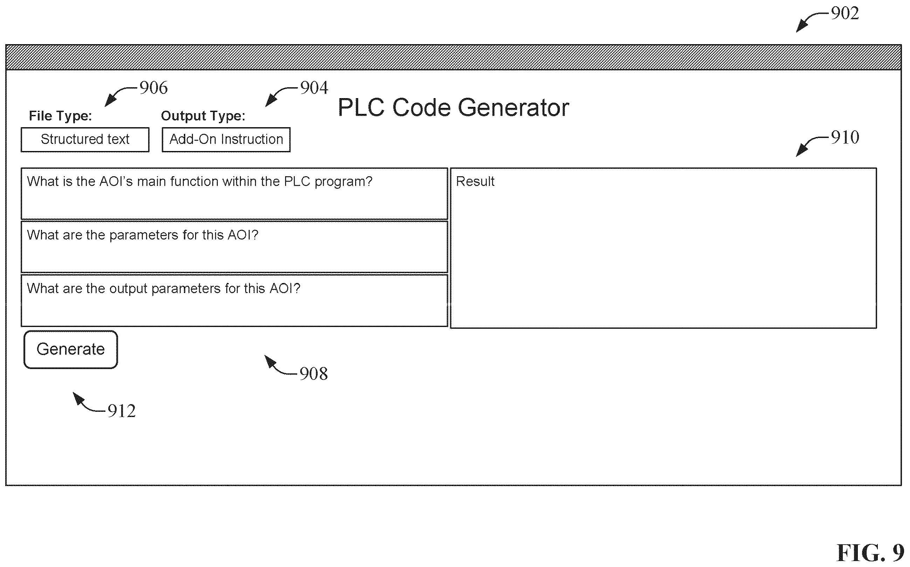

FIG. 9 is an example user interface 902 that can be generated by the user interface component 204 when the user invokes the code generation portal 504 of the IDE system 202. User interface 902 is not to be construed as limiting, and it is to be appreciated that any suitable user interface capable of receiving a user's natural language functional descriptions or prompts and outputting control code generated by the generative AI model 226 based on these inputs is within the scope of one or more embodiments. Interface 902 includes a control 904 that allows the user to select the type of output that the user wishes to generate (e.g., a routine or an AOI). In this example, the user can select to generate a routine or an AOI. Another control 906 allows the user to select a file type for the output (e.g., a structured text file, a ladder logic file, a Matlab file, etc.).

Based on the user's selection of the output type and file type, the user interface component 204 renders one or more questions in data entry fields 908 that are designed to prompt the user for the functional requirements of the routine or AOI to be generated. In the illustrated example, the user has selected to generate an AOI to be added to a control program, formatted as a structured text file. Based on these selections, the user interface 902 prompts the user to describe the AOI's main function within the PLC program to which the AOI will be added (the first field 908), to describe the input parameters for the AOI (the second field 908), and to describe the output parameters for the AOI (the third field 908). If the user selects to generate a routine rather than an AOI, the fields 908 can prompt the user for other information that can be used to determine the functional requirements of the routine. These prompts can ask the user to provide, for example, the key components of the control routine, a description of a typical process flow in the routine, an indication of whether and how the routine handles errors, or other such information.

Once the user has submitted answers to the questions presented in the data fields 908, selection of a Generate button 912 causes the AI component 210 to generate documented control code 804 or an AOI based on the user's answers, as described above in connection with FIG. 8, and to render the resulting code 804 in a results field 910. If desired, the user can edit the resulting AOI as needed within the field 910 before exporting the AOI to their control program (which may currently be in development using the IDE system's development tools). The user can also otherwise verify that the generated AOI or control code 804 satisfies the requirements as determined from the answers to the pre-written prompts in fields 908. The AI component 210 can use this verification, or otherwise use the user's modifications to the generated code 804, to refine the training of the generative AI model 226 so that similar requests will yield generated code 804 having a higher confidence of accuracy.

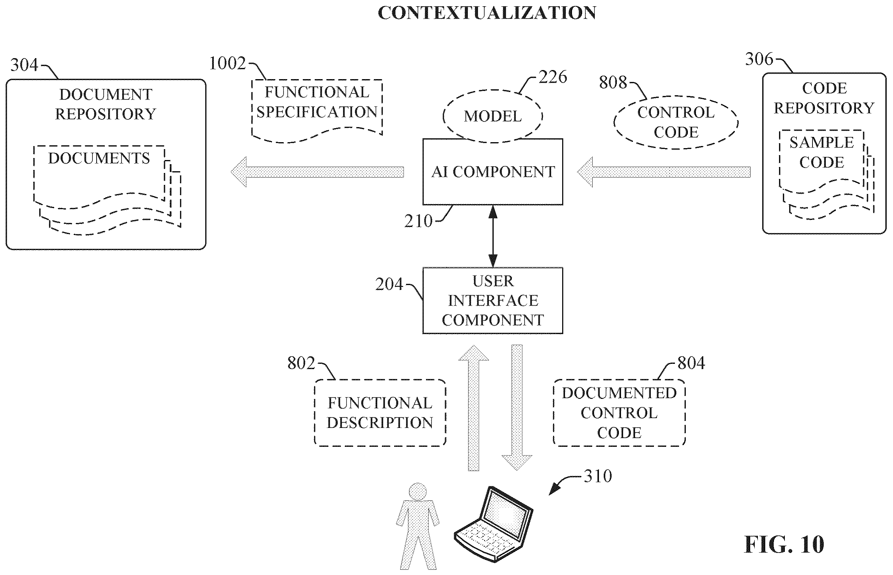

The AI component 210 can continually fine-tune the content of the document repository 304 and code repository 304 based on interactions from multiple users of the IDE system 202 to improve the accuracy of the control code 804 generated by the model 226. As part of this refinement, the AI component 210 can use information contained in one of the repositories to generate new content for the other repository. FIG. 10 is a diagram illustrating a contextualization process in which the AI component 210 converts code stored in the code repository 306 into documentation that is then stored in the document repository 304. In this example, a user has submitted a functional description 802 to the IDE system 202, and the AI component 210 has generated documented control code 804 based on this description 802, as described above in connection with FIGs. 8 and 9. Additionally, the AI component 210 can generate a text-based functional specification 1002 for the generated code 804 based on the functional description 802, any pre-defined control code 808 used to generate the code 804, and the generated code 804 itself, and store this functional specification 1002 as a document within the document repository 304.

In an example scenario, the functional specification 1002 generated in this manner can be a natural language functional description of the generated control code 804, generated by the AI component 210 based in part on the known functionality of any sample control code 808 used to generate the documented control code 804, the user's functional description 802 used as input for generating the code 804, and any embedded code documentation generated by the AI component 210. The generated code 804 itself can be stored in the code repository 306 in association with the prompts and user responses (e.g., the functional description 802) used to generate the code 804, and the system 202 can create a link between the code 804 stored in the code repository 306 and its corresponding functional description 1002 or documentation stored in the document repository 304. This data can be used to refine the training of the generative AI model 226.

The translation of a functional description 802 into documented control code 804 can also simplify the process of debugging the resulting code 804 if necessary. For example, if a user identifies errors in the control code 804 during testing or validation, and can trace the issue to the written content of the functional description 802, the user can update the functional description 802 and as needed and instruct the system 202 to generate updated code 804 based on the modified description 802. In this way, the code 804 can be corrected without requiring the user to review and debug the code 804.

Control code submitted to the code repository 306 from other sources, such as control code segments or AOIs developed by device vendors or original equipment manufacturers (OEMs) for control of their devices or machines, can also be contextualized in this manner. In such cases, the AI component 210 can generate a text-based functional specification document 1002 (such as a PDF document) describing the functionality of the code, which can be inferred by the generative AI model 226 based on analysis of the code itself as well as any documentation embedded within the code (e.g., rung or line comments added by the developer of the code).

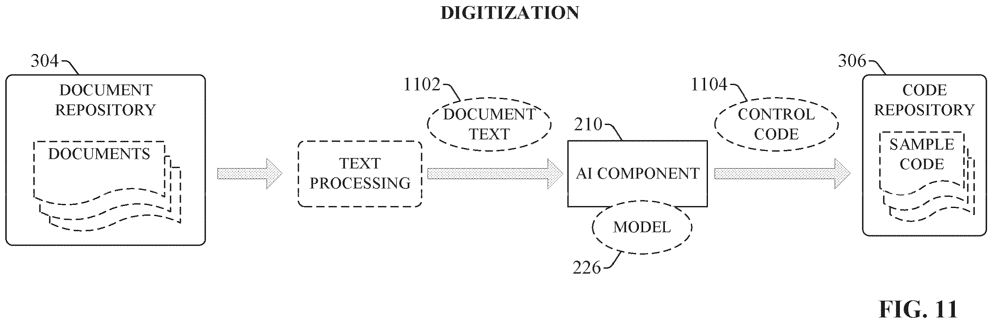

This contextualization process represents a synchronization from the code repository 306 to the document repository 304. The system 202 can also synchronize from the document repository 304 to the code repository 306 via a digitization process. FIG. 11 is a diagram illustrating digitization from the document repository 304 to the code repository 306. According to this process, the AI component 210 translates text-based documents stored in the document repository 304 to corresponding control code 1104 and stores this control code 1104 in the code repository 306. Documents that can be digitized in this manner can include, but are not limited to, functional specification documents describing portions of an industrial control process or workflow, industrial device documentation or user manuals, control programming support manuals, or other such documents. According to an example digitization process, the IDE system 202 can process the document to be translated using a cognitive service to extract the text 1102 from the document. The extracted document text 1102 is then provided as input to the generative AI model 226 by the AI component 210, and the model 226 generates control code 1104 based on generative AI analysis performed on the document text 1102.

In some embodiments, the generative AI model 226 or set of models can include a large language model, which can process the document text 1102 to identify control functionality described in the text 1102. The AI component 210 can then use the generative AI model 226 to generate control code 1104 designed to carry out this control functionality when executed on an industrial controller 118, and store this resulting control code on the code repository 306. The resulting control code 1104 can include embedded comments or documentation (e.g., variable names, rung or line comments, etc.) generated by the AI component 210 based on analysis of the document text 1102.

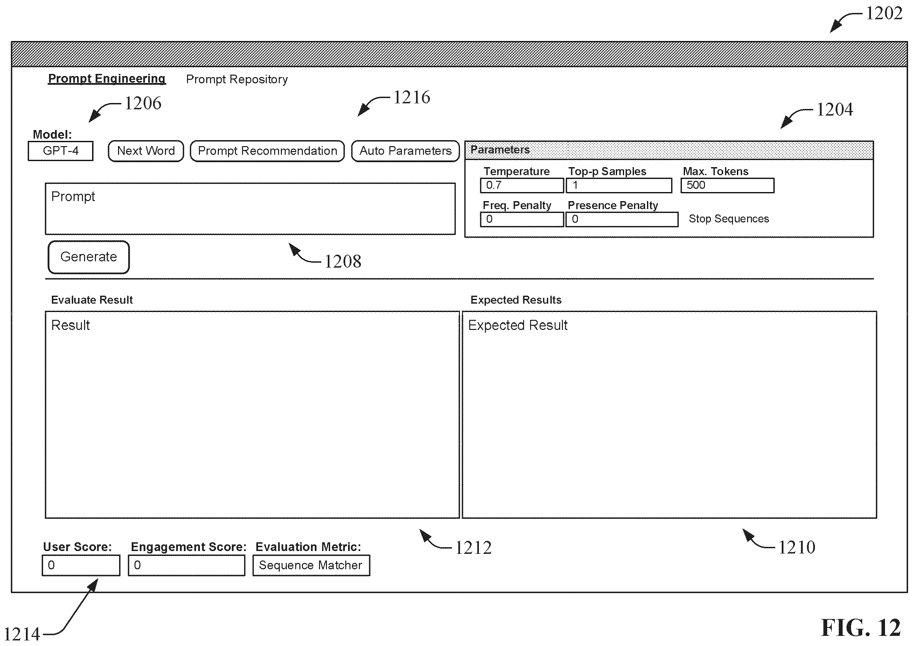

Some embodiments of IDE system 202 can also support advanced prompt engineering capabilities that offer the user a degree of control over the system's prompt configurations. FIG. 12 is an example user interface 1202 that can be generated by the user interface component 204 when the user invokes the prompt engineering services of the IDE system 202. This interface 1202 can be used to refine the training of the generative AI model 226 by automatically tuning the values of the hyperparameters used by the generative AI model 226 based on user feedback, and can also be used to refine prompts stored in the system's prompt repository 308, which are used to train the model 226 and to suggest pre-written prompts to the user having a high likelihood of causing the model 226 to produce a desired output. Interface 1202 includes a parameter window 1204 that renders current values of the hyperparameters used by the generative AI model 226. These hyperparameters can include, for example, temperature, top-p samples, maximum tokens, frequency penalty, presence penalty, and stop sequences. A user can edit the values of these hyperparameters if desired via interaction with window 1204. Interface 1202 also includes a prompt field 1208, a result field 1212 that renders a result of a prompt entered in the prompt field 1208, and an expected result field 1201 in which the result that is expected to be generated by the model 226 in response to submission of the prompt can be entered. An array of selection buttons 1216 allows the user to select a prompting option that is to be turned. These options can include next word recommendations, prompt recommendations, and automatic hyperparameter selection.

Next word recommendations are used by the system 202 to predict most likely next words of a user's entered query or functional description, and to present these predicted or recommended next words for selection by the user as the user is entering the query. To determine a recommended next word, the AI component 210 can use a bidirectional long short-term memory neural network (part of generative AI model 226) that uses context from the portion of the user's query that has already been entered to predict a likely or suitable next word in the query. This neural network can be trained using prompts that are already stored in the system's prompt repository 308 along with their corresponding responses or outputs.

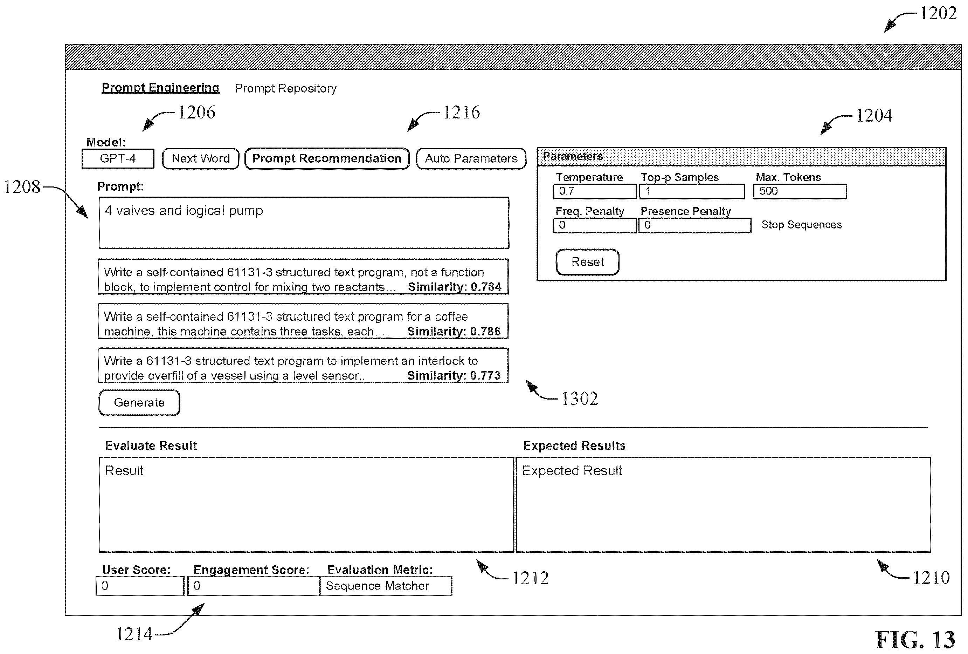

FIG. 13 is an example view of user interface 1202 that is invoked when the user selects the prompt recommendation interface from the selection buttons 1216. This view of the interface 1202 can allow the user to enhance the IDE system's prompting output, taking into account both user ratings and output evaluation metrics in order to generate prompts designed to assist the generative AI model 226 to produce control code outputs that accurately align with users' needs. Internal and external domain experts can use interface 1202 to enhance prompt-to-output pairs stored in the prompt repository 308.

According to an example prompt engineering workflow, the user can select a type of AI model (e.g., GPT-4, GPT-3, etc.) using a model selection field 1206, and can enter a prompt, or a portion of a prompt, in the prompt field 1208. As the user enters prompt text into the prompt field 1208, the AI component 210 identifies and renders stored prompts 1302 selected from the prompt repository 308 that are determined to be similar to the prompt entered in the prompt field 1208. In some embodiments, the AI component 210 can perform an embedded search of the prompt repository 308 to identify stored prompts 1302 that are similar to the prompt (or partial prompt) entered in the prompt field 1208. Each of the recommended prompts 1302 can be displayed with a corresponding similarity score indicating a degree to which the prompt is similar to the entered prompt in the prompt field 1208.

The user can select one of the recommended prompts 1302, which causes the user's entered prompt in the prompt field 1208 to be replaced with the selected prompt, and also causes the values of the hyperparameters associated with the selected prompt 1302 to be rendered in the parameter window 1204. The prompt repository 308 stores its prewritten prompts together with expected results associated with the prompt. Selection of one of the recommended prompts 1302 also causes its stored expected result to be rendered in the expected results field 1210.

The user can then send the selected prompt 1302 to the generative AI model 226, which evaluates the prompt 1302 and renders its corresponding result (e.g., a control code segment or AOI) in the evaluate result field 1212. Since the prompt 1302 was chosen from a stored recommendation, the expected result stored with the prompt 1302 is also sent to the generative AI model 226 as additional contextual information to assist the model 226 in arriving at a more accurate response to the prompt 1302. The user can assess the accuracy of the generated result presented in the evaluate result field 1212 - e.g., by testing the generated code or AOI in a real-world environment - and make any necessary corrections to the result. This modified result can then be submitted to the prompt repository 308 by entering the modified result in the evaluate result field 1212. The user can also enter an engagement score and user score using metric fields 1214. These scores represent a user-defined metric of similarity between the stored expected result of the prompt and the actual result needed by the user.

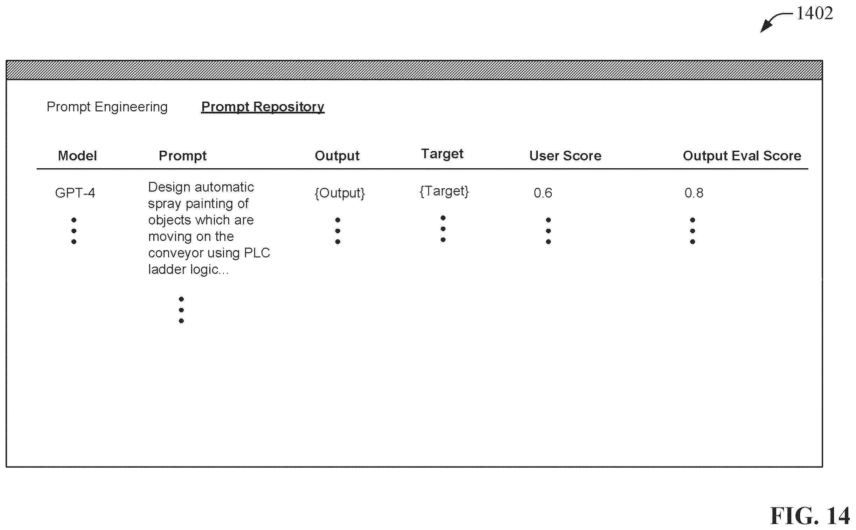

FIG. 14 is an example prompt repository user interface 1402 that renders the content of the prompt repository 308. The prompt repository 308 stores the pre-written prompts together with, for each prompt, the type of generative AI model for evaluating the prompt, its expected output from the model (e.g., control code or an AOI), a target output if provided by the user, and the user score and evaluation score assigned to the prompt. The user can search and view the stored prompts and their associated data using interface 1402.

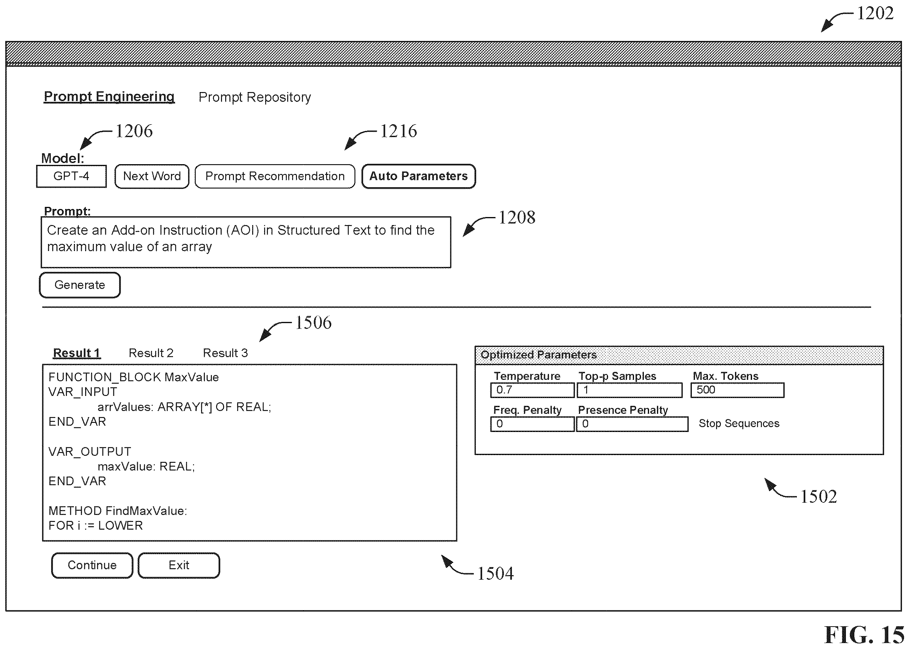

FIG. 15 is an example view of user interface 1202 that is invoked when the user selects the automated parameter tuning interface from the selection buttons 1216. This view of interface 1202 assists the user in tuning the hyperparameters used by the generative AI model 226 to generate control code outputs. According to an example tuning workflow, after selecting a type of generative AI model 226 in the model field 1206, the user can enter a prompt in the prompt field 1208 and submit this prompt to the model 226. In response, the AI component 210 can evaluate the prompt multiple times using the model 226 with respective multiple different sets of values for the hyperparameters, which are automatically selected by the AI component 210 (e.g., based on random selection or another selection criterion). The results of these multiple evaluations, in the form of respective different control code or AOI outputs, are rendered in a results area 1504. In the example illustrated in FIG. 15, three results are generated, which can be selectively viewed using navigation tabs 1506. Selection of a result from the results area 1504 causes an optimized parameter window 1502 to be populated with the values of the hyperparameters that were used by the model 226 to generate the selected response.

The user can select a preferred response from among the multiple responses (that is, a response that most accurately satisfies the prompt entered in prompt field 1208), and perform another iteration of the tuning process based on the selected result. For this next iteration, the AI component 210 sets the values of the hyperparameters based on the result that was selected from the previous iteration and its corresponding hyperparameter values. The result selected from the previous iteration can also be provided to the model 226 as contextual information for the next iteration. The prompt is then evaluated multiple times by the generative AI model 226 using respective multiple new sets of hyperparameter values. Another set of results are generated based on this iteration and presented in the results area 1504 for user selection. The user can repeat this process multiple times until an acceptable response is generated by the model 226. When an acceptable result is generated (that is, a result determined by the user to adequately satisfy the prompt), the user can choose to output the hyperparameter values that were used to generate this result so that these hyperparameter values are used for subsequent prompt submissions to the model 226 (e.g., by loading the optimized hyperparameter values in the parameters window 1204 of FIG. 13, or storing the hyperparameter values in the prompt repository 308 together with the prompt). This iterative approach to searching for a substantially optimal combination of hyperparameter values can assist the user in tuning the model's hyperparameters to generate a preferred output based on user selection.

The generative AI-enabled industrial IDE system described herein simplifies the method by which industrial control code is written, configured, optimized, and documented. The augmentable centralized documentation and code repositories enable the IDE system to offer advanced recommendations of reusable and pre-configured control code, reducing errors associated with fully manual coding. The IDE system's interface accepts natural language as input for specifying the functional requirements of an industrial control application, guided by pre-defined and user-validated prompts stored in the prompt repository, thereby allowing non-programmers to create accurate control code satisfying the user's functional requirements. The system's prompt engineering tools embedded search functionality can yield highly relevant prompt-to-response pairs, and automated hyperparameter generation can improve the accuracy of control programs generated using the system's generative AI tools.

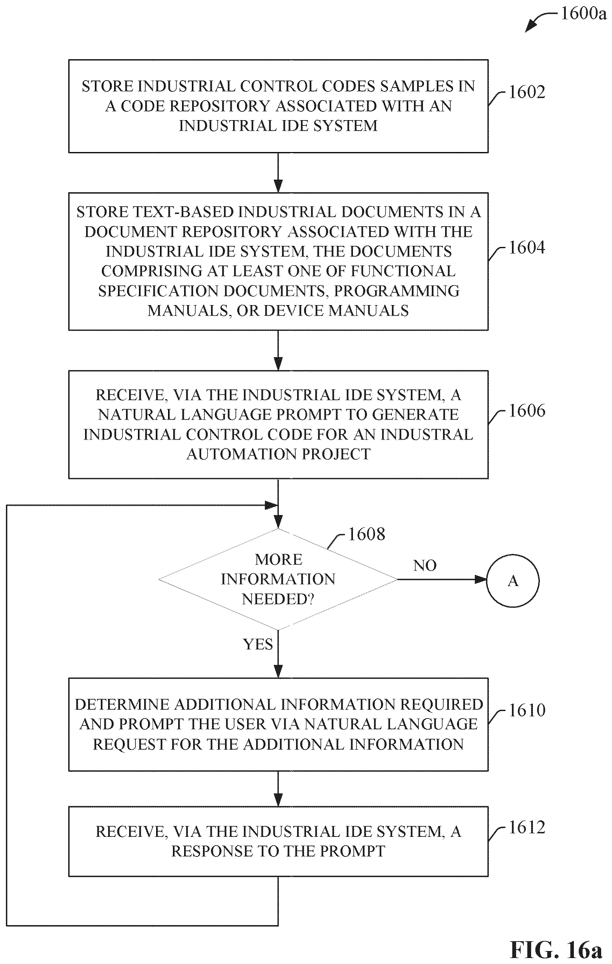

FIGs 16a-19b illustrate various methodologies in accordance with one or more embodiments of the subject application. While, for purposes of simplicity of explanation, the one or more methodologies shown herein are shown and described as a series of acts, it is to be understood and appreciated that the subject innovation is not limited by the order of acts, as some acts may, in accordance therewith, occur in a different order and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the innovation. Furthermore, interaction diagram(s) may represent methodologies, or methods, in accordance with the subject disclosure when disparate entities enact disparate portions of the methodologies. Further yet, two or more of the disclosed example methods can be implemented in combination with each other, to accomplish one or more features or advantages described herein.

FIG. 16a illustrates a first part of an example methodology 1600a for using generative AI to generate industrial control code. Initially, at 1602, industrial control code samples are stored in a code repository associated with an industrial IDE system. These code samples can include, for example, ladder logic, structured text, add-on instructions, or other such code that, when executed on an industrial controller, cause the controller to carry out an industrial automation monitoring or control function. The code samples can comprise predeveloped and tested control program segments for performing specific control or monitoring functions, or for use with specific types of industrial control applications.

At 1604, text-based industrial documents are sored in a document repository associated with the industrial IDE system. These documents can comprise at least one of functional specification documents for industrial automation systems, control programming manuals (e.g., instruction or command references for various industrial programming platforms), industrial device manuals, plant standard definitions, or other such documents.

At 1606, a natural language request to generate industrial control code for an industrial automation project is received as a prompt via the industrial IDE system's user interface. This initial prompt may be worded at any level of detail or granularity, and may specify such information as the type of industrial control application for which the control code is required (e.g., conveyor control, web tension control, stamping press control, batch processing, etc.), a description of a control or mathematical function to be carried out by the code, a specific type of product or material to be produced by the automation system for which the control code is being created, the hardware platform on which the control code will execute (e.g., a specific vendor or model of industrial controller), the types and models of industrial devices and assets that make up the automation system for which the control code is being created, or other such information.

At 1608, the prompt is analyzed by the IDE system using a generative AI model to determine if sufficient information can be inferred from the prompt to determine the functional requirements of the control code to be created, and a determination is made as to whether more information is needed from the user in order to generate control code having a high probability of satisfying the prompt. If additional information is required (YES at step 1608), the methodology proceeds to step 1610, where the generative AI model determines the additional information required, and a natural language request designed to guide the user toward providing the additional information is rendered. At 1612, a response to the request generated at step 1610 is received via interaction with the user interface.

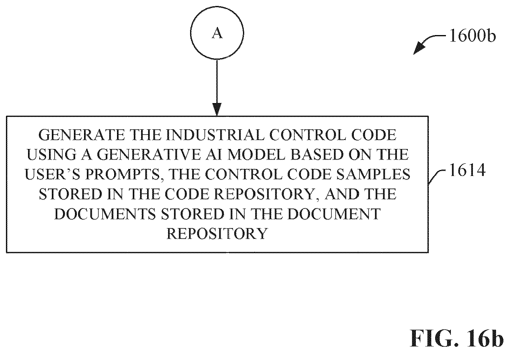

Steps 1608-1612 are repeated as a natural language dialog with the user until sufficient information translatable to a set of functional requirements for the requested control code component has been obtained. When no further information is required from the used (NO at step 1608), the methodology proceeds to the second part 1600b illustrated in FIG. 16b. At 1614, industrial control code is generated by the IDE system using a generative AI model based on the user's natural language prompts, the control code samples stored in the code repository, and the documents stored in the document repository.

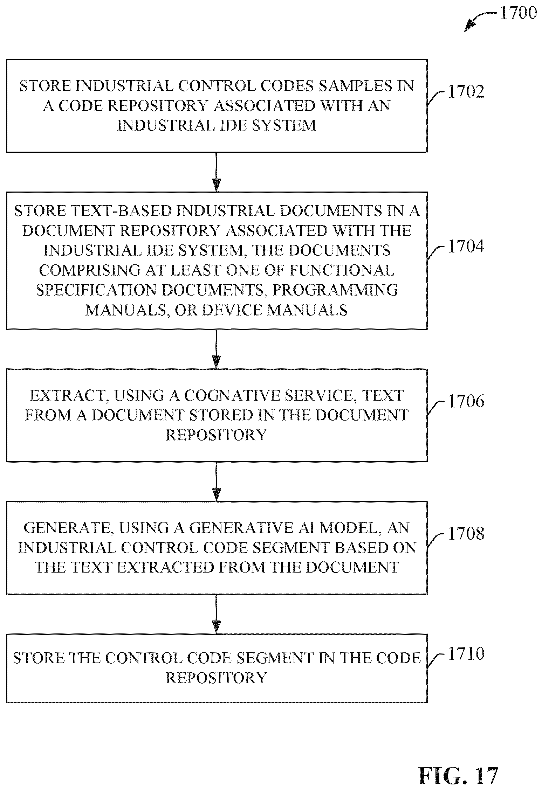

FIG. 17 illustrates an example methodology 1700 for synchronizing a document repository and a code repository used by a generative AI-enabled industrial IDE system by digitizing documents in the document repository into control code samples. Initially, at 1702, industrial control code samples are stored in a code repository associated with the industrial IDE system (similar to step 1602 of methodology 1600a). At 1704, text-based industrial documents are stored in a document repository associated with the industrial IDE system (similar to step 1604 of methodology 1600a).

At 1706, using a cognitive service or another approach, text from a document stored in the document repository is extracted. At 1708, an industrial control code segment or sample is generated by the IDE system using a generative AI model based on the text extracted from the document. For example, the generative AI component may identify control functionality or a control sequence described in the extracted text, and generate control code for performing the identified control functionality or sequence. In some cases, the generative AI mode may also analyze text from programming or device manuals stored in the document repository in order to determine instructions or code formatting to be used in the control code. At 1710, the control code generated at step 1708 is stored in the code repository.

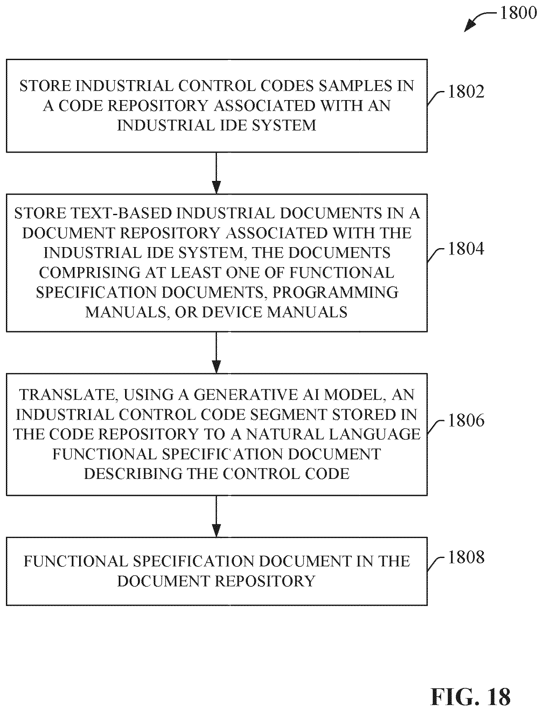

FIG. 18 illustrates a methodology 1800 for synchronizing a document repository and a code repository used by a generative AI-enabled industrial IDE system by contextualizing control code in the code repository into documentation for storage in the document repository. Initially, at 1802, industrial control code samples are stored in a code repository associated with the industrial IDE system (similar to step 1602 of methodology 1600a). At 1804, text-based industrial documents are stored in a document repository associated with the industrial IDE system (similar to step 1604 of methodology 1600a).

At 1806, an industrial control code segment stored in the code repository is translated by the IDE system, using a generative AI model, to a natural language document describing the functionality of the control code. At 1808, the document generated at step 1806 is stored in the document repository.

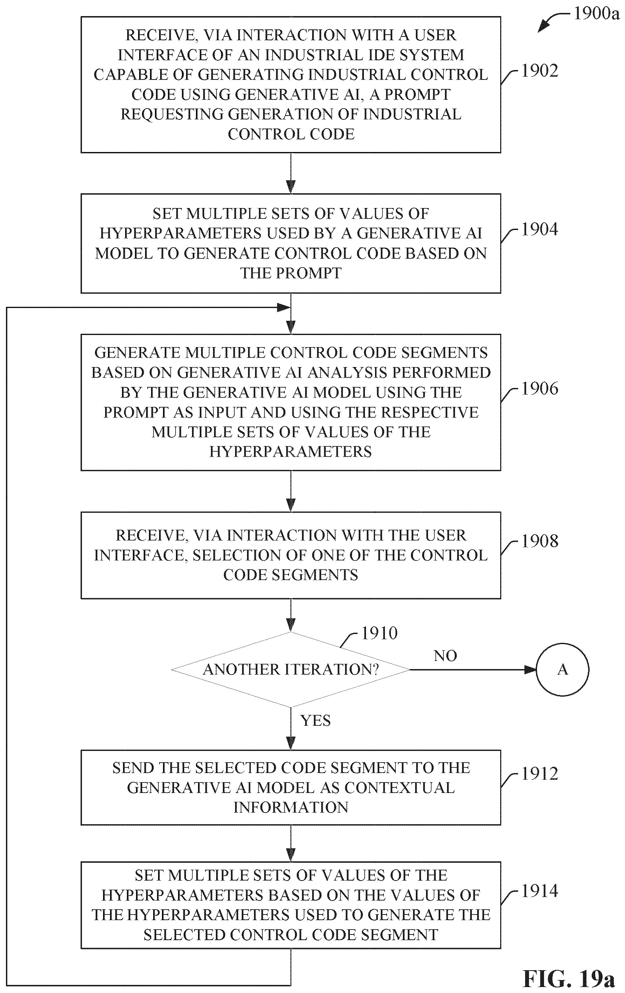

FIG. 19a illustrates a first part of an example methodology 1900a for automatically tuning hyperparameters for a generative AI model used by an industrial IDE system for generating control code from natural language inputs. Initially, at 1902, a prompt requesting generation of industrial control code is received via interaction with a user interface of an industrial IDE system capable of generating control code using generative AI. At 1904, multiple sets of values of hyperparameters used by the IDE system's generative AI model are set. These initial values can be set randomly by the IDE system or based on another selection criterion.

At 1906, multiple control code segments are generated based on generative AI analysis performed by the generative AI model using the prompt received at step 1902 as input and using the respective multiple sets of values of the hyperparameters set at step 1904. At 1908, a selection of one of the control code segments is received via interaction with the user interface. At 1910, a determination is made as to whether another iteration of control code generation is to be performed. This determination can be based, for example, on an indication from the user that another iteration is to be performed using the selected control code segment as context. If another iteration is to be performed (YES at step 1910), the methodology proceeds to step 1912, where the code segment selected at step 1908 is sent to the generative AI model as contextual information. At 1914, another set of values of the hyperparameters are set based on the values of the hyperparameters used to generate the control code segment selected at step 1908. The methodology then returns to step 1906, steps 1906-1908 are repeated with the sets of values set at step 1914.

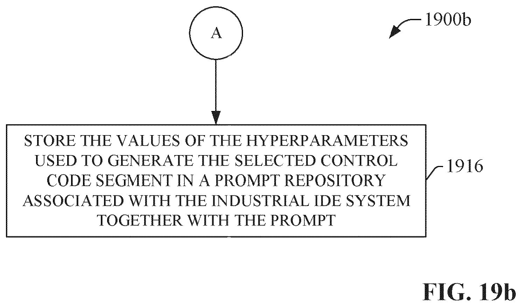

Steps 1906-1914 are repeated until the user is satisfied with the code segment selected at step 1908. When the user indicates that no further iterations will be executed (NO at step 1910), the methodology proceeds to the second part 1900b illustrated in FIG. 19b. At 1916, the values of the hyperparameters used to generate the control code segment most recently selected at step 1908 are stored in a prompt repository associated with the industrial IDE system together with the prompt. This stored prompt and tuned hyperparameter information can be used to train the generative AI model or to process similar prompts subsequently received by the industrial IDE system.

Embodiments, systems, and components described herein, as well as control systems and automation environments in which various aspects set forth in the subject specification can be carried out, can include computer or network components such as servers, clients, programmable logic controllers (PLCs), automation controllers, communications modules, mobile computers, on-board computers for mobile vehicles, wireless components, control components and so forth which are capable of interacting across a network. Computers and servers include one or more processors-electronic integrated circuits that perform logic operations employing electric signals-configured to execute instructions stored in media such as random access memory (RAM), read only memory (ROM), a hard drives, as well as removable memory devices, which can include memory sticks, memory cards, flash drives, external hard drives, and so on.

Similarly, the term PLC (programmable logic controller) or automation controller as used herein can include functionality that can be shared across multiple components, systems, and/or networks. As an example, one or more PLCs or automation controllers can communicate and cooperate with various network devices across the network. This can include substantially any type of control, communications module, computer, Input/Output (I/O) device, sensor, actuator, and human machine interface (HMI) that communicate *via* the network, which includes control, automation, and/or public networks. The PLC or automation controller can also communicate to and control various other devices such as standard or safety-rated I/O modules including analog, digital, programmed/intelligent I/O modules, other programmable controllers, communications modules, sensors, actuators, output devices, and the like.

The network can include public networks such as the internet, intranets, and automation networks such as control and information protocol (CIP) networks including DeviceNet, ControlNet, safety networks, and Ethernet/IP. Other networks include Ethernet, DH/DH+, Remote I/O, Fieldbus, Modbus, Profibus, CAN, wireless networks, serial protocols, and so forth. In addition, the network devices can include various possibilities (hardware and/or software components). These include components such as switches with virtual local area network (VLAN) capability, LANs, WANs, proxies, gateways, routers, firewalls, virtual private network (VPN) devices, servers, clients, computers, configuration tools, monitoring tools, and/or other devices.

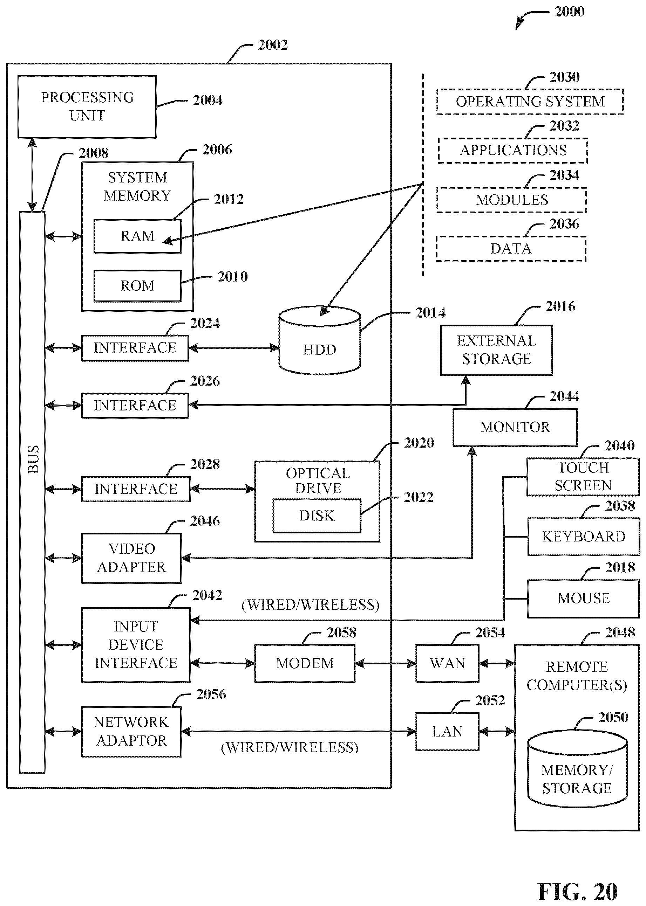

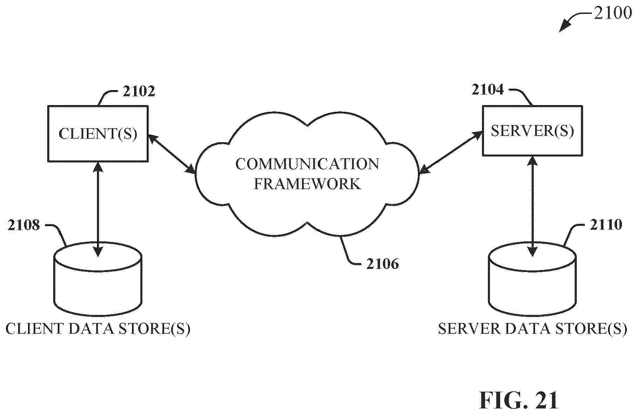

In order to provide a context for the various aspects of the disclosed subject matter, FIGs. 20 and 21 as well as the following discussion are intended to provide a brief, general description of a suitable environment in which the various aspects of the disclosed subject matter may be implemented. While the embodiments have been described above in the general context of computer-executable instructions that can run on one or more computers, those skilled in the art will recognize that the embodiments can be also implemented in combination with other program modules and/or as a combination of hardware and software.

Generally, program modules include routines, programs, components, data structures, etc., that perform particular tasks or implement particular abstract data types. Moreover, those skilled in the art will appreciate that the inventive methods can be practiced with other computer system configurations, including single-processor or multiprocessor computer systems, minicomputers, mainframe computers, Internet of Things (IoT) devices, distributed computing systems, as well as personal computers, hand-held computing devices, microprocessor-based or programmable consumer electronics, and the like, each of which can be operatively coupled to one or more associated devices.

The illustrated embodiments herein can be also practiced in distributed computing environments where certain tasks are performed by remote processing devices that are linked through a communications network. In a distributed computing environment, program modules can be located in both local and remote memory storage devices.

Computing devices typically include a variety of media, which can include computer-readable storage media, machine-readable storage media, and/or communications media, which two terms are used herein differently from one another as follows. Computer-readable storage media or machine-readable storage media can be any available storage media that can be accessed by the computer and includes both volatile and nonvolatile media, removable and non-removable media. By way of example, and not limitation, computer-readable storage media or machine-readable storage media can be implemented in connection with any method or technology for storage of information such as computer-readable or machine-readable instructions, program modules, structured data or unstructured data.

Computer-readable storage media can include, but are not limited to, random access memory (RAM), read only memory (ROM), electrically erasable programmable read only memory (EEPROM), flash memory or other memory technology, compact disk read only memory (CD-ROM), digital versatile disk (DVD), Blu-ray disc (BD) or other optical disk storage, magnetic cassettes, magnetic tape, magnetic disk storage or other magnetic storage devices, solid state drives or other solid state storage devices, or other tangible and/or non-transitory media which can be used to store desired information. In this regard, the terms "tangible" or "non-transitory" herein as applied to storage, memory or computer-readable media, are to be understood to exclude only propagating transitory signals per se as modifiers and do not relinquish rights to all standard storage, memory or computer-readable media that are not only propagating transitory signals per se.

Computer-readable storage media can be accessed by one or more local or remote computing devices, e.g., via access requests, queries or other data retrieval protocols, for a variety of operations with respect to the information stored by the medium.

Communications media typically embody computer-readable instructions, data structures, program modules or other structured or unstructured data in a data signal such as a modulated data signal, e.g., a carrier wave or other transport mechanism, and includes any information delivery or transport media. The term "modulated data signal" or signals refers to a signal that has one or more of its characteristics set or changed in such a manner as to encode information in one or more signals. By way of example, and not limitation, communication media include wired media, such as a wired network or direct-wired connection, and wireless media such as acoustic, RF, infrared and other wireless media.

With reference again to FIG. 20, the example environment 2000 for implementing various embodiments of the aspects described herein includes a computer 2002, the computer 2002 including a processing unit 2004, a system memory 2006 and a system bus 2008. The system bus 2008 couples system components including, but not limited to, the system memory 2006 to the processing unit 2004. The processing unit 2004 can be any of various commercially available processors. Dual microprocessors and other multi-processor architectures can also be employed as the processing unit 2004.

The system bus 2008 can be any of several types of bus structure that can further interconnect to a memory bus (with or without a memory controller), a peripheral bus, and a local bus using any of a variety of commercially available bus architectures. The system memory 2006 includes ROM 2010 and RAM 2012. A basic input/output system (BIOS) can be stored in a non-volatile memory such as ROM, erasable programmable read only memory (EPROM), EEPROM, which BIOS contains the basic routines that help to transfer information between elements within the computer 2002, such as during startup. The RAM 2012 can also include a highspeed RAM such as static RAM for caching data.

The computer 2002 further includes an internal hard disk drive (HDD) 2014 (e.g., EIDE, SATA), one or more external storage devices 2016 (e.g., a magnetic floppy disk drive (FDD) 2016, a memory stick or flash drive reader, a memory card reader, etc.) and an optical disk drive 2020 (e.g., which can read or write from a CD-ROM disc, a DVD, a BD, etc.). While the internal HDD 2014 is illustrated as located within the computer 2002, the internal HDD 2014 can also be configured for external use in a suitable chassis (not shown). Additionally, while not shown in environment 2000, a solid state drive (SSD) could be used in addition to, or in place of, an HDD 2014. The HDD 2014, external storage device(s) 2016 and optical disk drive 2020 can be connected to the system bus 2008 by an HDD interface 2024, an external storage interface 2026 and an optical drive interface 2028, respectively. The interface 2024 for external drive implementations can include at least one or both of Universal Serial Bus (USB) and Institute of Electrical and Electronics Engineers (IEEE) 1394 interface technologies. Other external drive connection technologies are within contemplation of the embodiments described herein.

The drives and their associated computer-readable storage media provide nonvolatile storage of data, data structures, computer-executable instructions, and so forth. For the computer 2002, the drives and storage media accommodate the storage of any data in a suitable digital format. Although the description of computer-readable storage media above refers to respective types of storage devices, it should be appreciated by those skilled in the art that other types of storage media which are readable by a computer, whether presently existing or developed in the future, could also be used in the example operating environment, and further, that any such storage media can contain computer-executable instructions for performing the methods described herein.

A number of program modules can be stored in the drives and RAM 2012, including an operating system 2030, one or more application programs 2032, other program modules 2034 and program data 2036. All or portions of the operating system, applications, modules, and/or data can also be cached in the RAM 2012. The systems and methods described herein can be implemented utilizing various commercially available operating systems or combinations of operating systems.

Computer 2002 can optionally comprise emulation technologies. For example, a hypervisor (not shown) or other intermediary can emulate a hardware environment for operating system 2030, and the emulated hardware can optionally be different from the hardware illustrated in FIG. 20. In such an embodiment, operating system 2030 can comprise one virtual machine (VM) of multiple VMs hosted at computer 2002. Furthermore, operating system 2030 can provide runtime environments, such as the Java runtime environment or the .NET framework, for application programs 2032. Runtime environments are consistent execution environments that allow application programs 2032 to run on any operating system that includes the runtime environment. Similarly, operating system 2030 can support containers, and application programs 2032 can be in the form of containers, which are lightweight, standalone, executable packages of software that include, e.g., code, runtime, system tools, system libraries and settings for an application.

Further, computer 2002 can be enable with a security module, such as a trusted processing module (TPM). For instance with a TPM, boot components hash next in time boot components, and wait for a match of results to secured values, before loading a next boot component. This process can take place at any layer in the code execution stack of computer 2002, e.g., applied at the application execution level or at the operating system (OS) kernel level, thereby enabling security at any level of code execution.

A user can enter commands and information into the computer 2002 through one or more wired/wireless input devices, e.g., a keyboard 2038, a touch screen 2040, and a pointing device, such as a mouse 2018. Other input devices (not shown) can include a microphone, an infrared (IR) remote control, a radio frequency (RF) remote control, or other remote control, a joystick, a virtual reality controller and/or virtual reality headset, a game pad, a stylus pen, an image input device, e.g., camera(s), a gesture sensor input device, a vision movement sensor input device, an emotion or facial detection device, a biometric input device, e.g., fingerprint or iris scanner, or the like. These and other input devices are often connected to the processing unit 2004 through an input device interface 2044 that can be coupled to the system bus 2008, but can be connected by other interfaces, such as a parallel port, an IEEE 1394 serial port, a game port, a USB port, an IR interface, a BLUETOOTH^{®} interface, etc.

A monitor 2044 or other type of display device can be also connected to the system bus 2008 via an interface, such as a video adapter 2046. In addition to the monitor 2044, a computer typically includes other peripheral output devices (not shown), such as speakers, printers, etc.

The computer 2002 can operate in a networked environment using logical connections via wired and/or wireless communications to one or more remote computers, such as a remote computer(s) 2048. The remote computer(s) 2048 can be a workstation, a server computer, a router, a personal computer, portable computer, microprocessor-based entertainment appliance, a peer device or other common network node, and typically includes many or all of the elements described relative to the computer 2002, although, for purposes of brevity, only a memory/storage device 2050 is illustrated. The logical connections depicted include wired/wireless connectivity to a local area network (LAN) 2052 and/or larger networks, e.g., a wide area network (WAN) 2054. Such LAN and WAN networking environments are commonplace in offices and companies, and facilitate enterprise-wide computer networks, such as intranets, all of which can connect to a global communications network, e.g., the Internet.

When used in a LAN networking environment, the computer 2002 can be connected to the local network 2052 through a wired and/or wireless communication network interface or adapter 2056. The adapter 2056 can facilitate wired or wireless communication to the LAN 2052, which can also include a wireless access point (AP) disposed thereon for communicating with the adapter 2056 in a wireless mode.

When used in a WAN networking environment, the computer 2002 can include a modem 2058 or can be connected to a communications server on the WAN 2054 via other means for establishing communications over the WAN 2054, such as by way of the Internet. The modem 2058, which can be internal or external and a wired or wireless device, can be connected to the system bus 2008 via the input device interface 2042. In a networked environment, program modules depicted relative to the computer 2002 or portions thereof, can be stored in the remote memory/storage device 2050. It will be appreciated that the network connections shown are example and other means of establishing a communications link between the computers can be used.

When used in either a LAN or WAN networking environment, the computer 2002 can access cloud storage systems or other network-based storage systems in addition to, or in place of, external storage devices 2016 as described above. Generally, a connection between the computer 2002 and a cloud storage system can be established over a LAN 2052 or WAN 2054 e.g., by the adapter 2056 or modem 2058, respectively. Upon connecting the computer 2002 to an associated cloud storage system, the external storage interface 2026 can, with the aid of the adapter 2056 and/or modem 2058, manage storage provided by the cloud storage system as it would other types of external storage. For instance, the external storage interface 2026 can be configured to provide access to cloud storage sources as if those sources were physically connected to the computer 2002.

The computer 2002 can be operable to communicate with any wireless devices or entities operatively disposed in wireless communication, e.g., a printer, scanner, desktop and/or portable computer, portable data assistant, communications satellite, any piece of equipment or location associated with a wirelessly detectable tag (e.g., a kiosk, news stand, store shelf, etc.), and telephone. This can include Wireless Fidelity (Wi-Fi) and BLUETOOTH^{®} wireless technologies. Thus, the communication can be a predefined structure as with a conventional network or simply an ad hoc communication between at least two devices.

FIG. 21 is a schematic block diagram of a sample computing environment 2100 with which the disclosed subject matter can interact. The sample computing environment 2100 includes one or more client(s) 2102. The client(s) 2102 can be hardware and/or software (e.g., threads, processes, computing devices). The sample computing environment 2100 also includes one or more server(s) 2104. The server(s) 2104 can also be hardware and/or software (e.g., threads, processes, computing devices). The servers 2104 can house threads to perform transformations by employing one or more embodiments as described herein, for example. One possible communication between a client 2102 and servers 2104 can be in the form of a data packet adapted to be transmitted between two or more computer processes. The sample computing environment 2100 includes a communication framework 2106 that can be employed to facilitate communications between the client(s) 2102 and the server(s) 2104. The client(s) 2102 are operably connected to one or more client data store(s) 2108 that can be employed to store information local to the client(s) 2102. Similarly, the server(s) 2104 are operably connected to one or more server data store(s) 2110 that can be employed to store information local to the servers 2104.

What has been described above includes examples of the subject innovation. It is, of course, not possible to describe every conceivable combination of components or methodologies for purposes of describing the disclosed subject matter, but one of ordinary skill in the art may recognize that many further combinations and permutations of the subject innovation are possible.

In particular and in regard to the various functions performed by the above described components, devices, circuits, systems and the like, the terms (including a reference to a "means") used to describe such components are intended to correspond, unless otherwise indicated, to any component which performs the specified function of the described component (e.g., a functional equivalent), even though not structurally equivalent to the disclosed structure, which performs the function in the herein illustrated exemplary aspects of the disclosed subject matter. In this regard, it will also be recognized that the disclosed subject matter includes a system as well as a computer-readable medium having computer-executable instructions for performing the acts and/or events of the various methods of the disclosed subject matter.

In addition, while a particular feature of the disclosed subject matter may have been disclosed with respect to only one of several implementations, such feature may be combined with one or more other features of the other implementations as may be desired and advantageous for any given or particular application. Furthermore, to the extent that the terms "includes," and "including" and variants thereof are used in either the detailed description or the claims, these terms are intended to be inclusive in a manner similar to the term "comprising."

In this application, the word "exemplary" is used to mean serving as an example, instance, or illustration. Any aspect or design described herein as "exemplary" is not necessarily to be construed as preferred or advantageous over other aspects or designs. Rather, use of the word exemplary is intended to present concepts in a concrete fashion.

Various aspects or features described herein may be implemented as a method, apparatus, or article of manufacture using standard programming and/or engineering techniques. The term "article of manufacture" as used herein is intended to encompass a computer program accessible from any computer-readable device, carrier, or media. For example, computer readable media can include but are not limited to magnetic storage devices (e.g., hard disk, floppy disk, magnetic strips...), optical disks [e.g., compact disk (CD), digital versatile disk (DVD)...], smart cards, and flash memory devices (e.g., card, stick, key drive...).

## Claims

1. A system (202), comprising:
a memory (220) that stores executable components and a generative artificial intelligence, AI, model (226); and
a processor (218), operatively coupled to the memory (220), that executes the executable components, the executable components comprising:
a user interface component (204) configured to receive, as natural language input, a prompt (512) specifying industrial control code design requirements; and
an AI component (210) configured to:
generate, using the generative AI model (226), industrial control code inferred to satisfy the industrial control code design requirements based on analysis of the prompt (512), sample control code store in a code repository (306), and text-based documents stored in a document repository (304),
generate, based on analysis using the generative AI model (226) of text contained in a functional specification document stored in the document repository (304), documented control code capable of performing a control function defined in the functional specification, the documented control code comprising embedded documentation generated based on the text of the functional specification document,
store the documented control code in the code repository (306),
generate, based on analysis using the generative AI model (226) of a control code sample stored in the code repository (306), a text-based functional specification document describing a function of the control code sample, and
store the text-based functional specification document in the document repository (304),
wherein the AI component (210) is further configured to embed functional documentation in the industrial control code based on the prompt (512), the text-based documents, and the control code samples.

2. The system (202) of claim 1, wherein the documents stored in the document repository (304) comprises at least one of industrial programming manuals, industrial device manuals, or functional specification documents.

3. The system (202) of one of claims 1 or 2, wherein the AI component (210) is further configured to store the industrial control code in the code repository (306), to store the functional documentation in the document repository (304), and to create a link between the industrial control code and the functional documentation.

4. The system (202) of one of claims 1 to 3, wherein the sample control code stored on the code repository (306) comprises at least one of control code submitted by a device or software vendor, customer-specific control code samples, or add-on instructions.

5. The system (202) of one of claims 1 to 4, wherein
the AI component (210) is configured to generate the industrial control code in a format specified as part of the prompt (512), and
the format is at least one of a ladder logic routine, a structured text routine, or an add-on instruction.

6. The system (202) of one of claims 1 to 5, wherein the AI component (210) is further configured to
set multiple sets of values of hyperparameters for the generative AI model (226),
generate, using the generative AI model (226), multiple versions of the industrial control code using the respective multiple sets of values of hyperparameters for the generative AI model (226), and
in response to receipt of a selection of a version of the industrial control code, from among the multiple versions of the industrial control code, store one of the sets of values of the hyperparameters corresponding to the version of the industrial control code in a prompt repository (308), and/or
wherein the AI component is further configured to, in response to the receipt of the selection of the version of the industrial control code:
set multiple sets of new values of the hyperparameters based on the one of the sets of values of the hyperparameters corresponding to the version of the industrial control code, and
generate, using the generative AI model (226) and based on the version of the industrial control code, multiple new versions of the industrial control code using the respective multiple new sets of values of hyperparameters for the generative AI model (226).

7. The system (202) of one of claims 1 to 6, wherein
the user interface component (204) is configured to render a user interface configured to receive the prompt (512),
in response to selection, via interaction with the user interface, of a type of output to be generated, the user interface component (204) renders one or more questions relevant to the type of output, and
the prompt (512) comprises answers to the questions submitted via interaction with the user interface, and/or
wherein the type of output is at least one of a routine or an add-on instruction.

8. A method, comprising:
receiving, by an industrial integrated development environment, IDE, system (202) comprising a processor (218), a prompt (512) requesting industrial control code that performs a specified control function, wherein the prompt (512) is formatted as a natural language input;
generating, by the industrial IDE system (202) using a generative artificial intelligence, AI, model (226), the industrial control code based on analysis of the prompt (512), sample control code store in a code repository (306), and text-based documents stored in a document repository (304);
translating, by the industrial IDE system (202) using the generative AI model (226), text of a document contained in the document repository (304) to documented control code capable of performing a control function defined in the document;
storing the documented control code in the code repository (306),
wherein the documented control code comprises embedded documentation generated based on the text of the document,
translating, by the industrial IDE system (202) using the generative Al model (226), a control code sample stored in the code repository (306) to a text-based functional specification document describing a function of the control code sample; and
storing by the industrial IDE system (202), the text-based functional specification document in the document repository (304).

9. The method of claim 8, wherein the documents stored in the document repository (304) comprises at least one of industrial programming manuals, industrial device manuals, or functional specification documents.

10. The method of claim 8, wherein the sample control code stored on the code repository (306) comprises at least one of control code submitted by a device or software vendor, customer-specific control code samples, or add-on instructions, and/or
wherein
the receiving comprises receiving, as part of the prompt (512), an indication of a requested format for the industrial control code,
the generating comprises generating the industrial control code in the format specified as part of the prompt (512), and
the format is at least one of a ladder logic routine, a structured text routine, or an add-on instruction.

11. The method of one of claims 8 to 10, further comprising:
setting, by the industrial IDE system (202), multiple sets of values of hyperparameters for the generative Al model (226),
generating, by the industrial IDE system (202) using the generative Al model (226), multiple versions of the industrial control code using the respective multiple sets of values of hyperparameters for the generative Al model (226), and
in response to receiving a selection of a version of the industrial control code, from among the multiple versions of the industrial control code, storing, by the industrial IDE system (202), one of the sets of values of the hyperparameters corresponding to the version of the industrial control code in a prompt repository (308).

12. A non-transitory computer-readable medium having stored thereon instructions that, in response to execution, cause an industrial integrated development environment (IDE) system (202) comprising a processor (218) to perform operations, the operations comprising:
receiving a prompt (512) requesting industrial control code that performs a specified control function, wherein the prompt (512) is formatted as a natural language input; and
generating, using a generative artificial intelligence, AI, model (226), the industrial control code based on analysis of the prompt (512), sample control code store in a code repository (306), and text-based documents stored in a document repository (304);
translating, using the generative AI model (226), text of a document contained in the document repository (304) to documented control code capable of performing a control function defined in the document;
storing the documented control code in the code repository (306),
wherein the documented control code comprises embedded documentation generated based on the text of the document,
translating using the generative AI model (226), a control code sample stored in the code repository (306) to a text-based functional specification document describing a function of the control code sample; and
storing the text-based functional specification document in the document repository (304).

13. The non-transitory computer-readable medium of claim 12, wherein the documents stored in the document repository (304) comprises at least one of industrial programming manuals, industrial device manuals, or functional specification documents.

## Patentansprüche

1. System (202), das Folgendes umfasst:
einen Speicher (220), der ausführbare Komponenten und ein generatives Modell (226) für künstliche Intelligenz, KI, speichert; und
einen Prozessor (218), der betriebsfähig mit dem Speicher (220) gekoppelt ist, der die ausführbaren Komponenten ausführt, wobei die ausführbaren Komponenten Folgendes umfassen:
eine Benutzeroberflächenkomponente (204), die dazu konfiguriert ist, als Eingabe in natürlicher Sprache eine Eingabeaufforderung (512) zu empfangen, die Anforderungen an die Gestaltung von industriellem Steuercode spezifiziert; und
eine Kl-Komponente (210), die zu Folgendem konfiguriert ist:
Generieren, unter Verwendung des generativen Kl-Modells (226), von industriellem Steuercode, der so hergeleitet wird, dass er die Anforderungen an die Gestaltung von industriellem Steuercode erfüllt, basierend auf der Analyse der Eingabeaufforderung (512), des in einem Code-Repository (306) gespeicherten Beispiel-Steuercodes und der in einem Dokumenten-Repository (304) gespeicherten textbasierten Dokumente,
Generieren, basierend auf einer Analyse unter Verwendung des generativen Kl-Modells (226) von Text, der in einem im Dokumenten-Repository (304) gespeicherten Funktionsspezifikationsdokument enthalten ist, eines dokumentierten Steuercodes, der in der Lage ist, eine in der Funktionsspezifikation definierte Steuerfunktion durchzuführen, wobei der dokumentierte Steuercode eingebettete Dokumentation umfasst, die basierend auf dem Text des Funktionsspezifikationsdokuments generiert wird,
Speichern des dokumentierten Steuercodes in dem Code-Repository (306), Generieren, basierend auf einer Analyse unter Verwendung des generativen Kl-Modells (226) eines in dem Code-Repository (306) gespeicherten Steuercode-Beispiels, eines textbasierten Funktionsspezifikationsdokuments, das eine Funktion des Steuercode-Beispiels beschreibt, und
Speichern des textbasierten Funktionsspezifikationsdokuments in dem Dokumenten-Repository (304),
wobei die KI-Komponente (210) des Weiteren dazu konfiguriert ist, basierend auf der Eingabeaufforderung (512), den textbasierten Dokumenten und den Steuercode-Beispielen Funktionsdokumentation in den industriellen Steuercode einzubetten.

2. System (202) nach Anspruch 1, wobei die in dem Dokumenten-Repository(304) gespeicherten Dokumente mindestens eines von industriellen Programmierhandbüchern, Handbücher für industrielle Vorrichtungen oder Funktionsspezifikationsdokumente umfassen.

3. System (202) nach einem der Ansprüche 1 oder 2, wobei die KI-Komponente (210) des Weiteren dazu konfiguriert ist, den industriellen Steuercode in dem Code-Repository (306) zu speichern, die Funktionsdokumentation in dem Dokumenten-Repository (304) zu speichern und eine Verknüpfung zwischen dem industriellen Steuercode und der Funktionsdokumentation herzustellen.

4. System (202) nach einem der Ansprüche 1 bis 3, wobei der in dem Code-Repository (306) gespeicherte Beispiel-Steuercode mindestens eines von einem Steuercode, der von einer Vorrichtung oder einem Softwareanbieter übermittelt wird, kundenspezifischen Steuercode-Beispielen oder Zusatzanweisungen umfasst.

5. System (202) nach einem der Ansprüche 1 bis 4, wobei
die Kl-Komponente (210) dazu konfiguriert ist, den industriellen Steuercode in einem Format zu generieren, das als Teil der Eingabeaufforderung (512) angegeben wird, und
das Format mindestens eines von einer Leiterlogikroutine, einer Routine für strukturierten Text oder einer Zusatzanweisung ist.

6. System (202) nach einem der Ansprüche 1 bis 5, wobei die Kl-Komponente (210) des Weiteren zu Folgendem konfiguriert ist:
Festlegen von mehreren Sätzen von Werten von Hyperparametern für das generative KI-Modell (226),
Generieren, unter Verwendung des generativen Kl-Modells (226), mehrerer Versionen des industriellen Steuercodes unter Verwendung der jeweiligen mehreren Sätze von Werten von Hyperparametern für das generative Kl-Modell (226), und
als Reaktion auf den Empfang einer Auswahl einer Version des industriellen Steuercodes aus den mehreren Versionen des industriellen Steuercodes, Speichern von einem der Sätze von Werten der Hyperparameter, der der Version des industriellen Steuercodes entspricht, in einem Eingabeaufforderungs-Repository (308), und/oder
wobei die Kl-Komponente des Weiteren als Reaktion auf den Empfang der Auswahl der Version des industriellen Steuercodes zu Folgendem konfiguriert ist:
Festlegen mehrerer Sätze neuer Werte der Hyperparameter basierend auf dem einem der Sätze von Werten der Hyperparameter, der der Version des industriellen Steuercodes entspricht, und
Generieren, unter Verwendung des generativen Kl-Modells (226) und basierend auf der Version es industriellen Steuercodes, mehrerer neuer Versionen des industriellen Steuercodes unter Verwendung der jeweiligen mehreren neuen Sätze von Werten von Hyperparametern für das generative KI-Modell (226).

7. System (202) nach einem der Ansprüche 1 bis 6, wobei
die Benutzeroberflächenkomponente (204) dazu konfiguriert ist, eine Benutzeroberfläche wiederzugeben, die zum Empfangen der Eingabeaufforderung (512) konfiguriert ist,
als Reaktion auf die Auswahl, mittels Interaktion mit der Benutzeroberfläche, eines zu generierenden Ausgabetyps, die Benutzeroberflächenkomponente (204) eine oder mehrere Fragen wiedergibt, die für den Ausgabetyp relevant sind, und
die Eingabeaufforderung (512) Antworten auf die Fragen umfasst, die mittels Interaktion mit der Benutzeroberfläche übermittelt werden, und/oder
wobei der Ausgabetyp mindestens eines von einer Routine oder einer Zusatzanweisung ist.

8. Verfahren, das Folgendes umfasst:
Empfangen, durch ein industrielles integriertes Entwicklungsumgebungssystem (Integrated Development Environment, IDE) (202), das einen Prozessor (218) umfasst, einer Eingabeaufforderung (512), die einen industriellen Steuercode anfordert, der eine spezifizierte Steuerfunktion durchführt, wobei die Eingabeaufforderung (512) als Eingabe in natürlicher Sprache formatiert ist;
Generieren, durch das industrielle IDE-System (202) unter Verwendung eines generativen Modells für künstliche Intelligenz, KI, (226) des industriellen Steuercodes basierend auf einer Analyse der Eingabeaufforderung (512), dem in einem Code-Repository (306) gespeicherten Beispiel-Steuercode und den in einem Dokumenten-Repository (304) gespeicherten textbasierten Dokumenten;
Übersetzen, durch das industrielle IDE-System (202) unter Verwendung des generativen KI-Modells (226) von Text aus einem in dem Dokumentenarchiv (304) enthaltenen Dokument in dokumentierten Steuercode, der in der Lage ist, eine in dem Dokument definierte Steuerfunktion auszuführen;
Speichern des dokumentierten Steuercodes in dem Code-Repository (306),
wobei der dokumentierte Steuercode eingebettete Dokumentation umfasst, die basierend auf dem Text des Dokuments generiert wurde,
Übersetzen, durch das industrielle IDE-System (202) unter Verwendung des generativen Kl-Modells (226) eines in dem Code-Repository (306) gespeicherten Steuercode-Beispiels in ein textbasiertes Funktionsspezifikationsdokument, das eine Funktion des Steuercode-Beispiels beschreibt, und
Speichern, durch das industrielle IDE-System (202), des textbasierten Funktionsspezifikationsdokuments in dem Dokumenten-Repository (304).

9. Verfahren nach Anspruch 8, wobei die in dem Dokumenten-Repository (304) gespeicherten Dokumente mindestens eines von industriellen Programmierhandbüchern, Handbücher für industrielle Vorrichtungen oder Funktionsspezifikationsdokumente umfassen.

10. Verfahren nach Anspruch 8, wobei der in dem Code-Repository (306) gespeicherte Beispiel-Steuercode mindestens eines von einem Steuercode, der von einer Vorrichtung oder einem Softwareanbieter übermittelt wird, kundenspezifischen Steuercode-Beispielen oder Zusatzanweisungen umfasst, und/oder
wobei
das Empfangen das Empfangen einer Angabe eines angeforderten Formats für den industriellen Steuercode als Teil der Eingabeaufforderung (512) umfasst,
das Generieren das Generieren des industriellen Steuercodes in dem Format, das als Teil der Eingabeaufforderung (512) spezifiziert wurde, umfasst und
das Format mindestens eines von einer Leiterlogikroutine, einer Routine für strukturierten Text oder einer Zusatzanweisung ist.

11. Verfahren nach einem der Ansprüche 8 bis 10, des Weiteren umfassend:
Festlegen, durch das industrielle IDE-System (202) von mehreren Sätzen von Werten von Hyperparametern für das generative KI-Modell (226),
Generieren, durch das industrielle IDE-System (202) unter Verwendung des generativen Kl-Modells (226), mehrerer Versionen des industriellen Steuercodes unter Verwendung der jeweiligen mehreren Sätze von Werten von Hyperparametern für das generative Kl-Modell (226), und
als Reaktion auf das Empfangen einer Auswahl einer Version des industriellen Steuercodes aus den mehreren Versionen des industriellen Steuercodes, Speichern, durch das industrielle IDE-System (202), von einem der Sätze von Werten der Hyperparameter, der der Version des industriellen Steuercodes entspricht, in einem Eingabeaufforderungs-Repository (308).

12. Nicht transitorisches computerlesbares Medium, auf dem computerausführbare Anweisungen gespeichert sind, die als Reaktion auf die Ausführung ein industrielles integriertes Entwicklungsumgebungssystem (IDE) (202), umfassend einen Prozessor (218), zum Durchführen von Operationen veranlassen, wobei die Operationen Folgendes umfassen:
Empfangen einer Eingabeaufforderung (512), die einen industriellen Steuercode anfordert, der eine spezifizierte Steuerfunktion durchführt, wobei die Eingabeaufforderung (512) als Eingabe in natürlicher Sprache formatiert ist; und
Generieren, unter Verwendung eines generativen Modells für künstliche Intelligenz, KI, (226) des industriellen Steuercodes basierend auf einer Analyse der Eingabeaufforderung (512), dem in einem Code-Repository (306) gespeicherten Beispiel-Steuercode und den in einem Dokumenten-Repository (304) gespeicherten textbasierten Dokumenten;
Übersetzen, unter Verwendung des generativen Kl-Modells (226) von Text aus einem in dem Dokumentenarchiv (304) enthaltenen Dokument in dokumentierten Steuercode, der in der Lage ist, eine in dem Dokument definierte Steuerfunktion auszuführen;
Speichern des dokumentierten Steuercodes in dem Code-Repository (306),
wobei der dokumentierte Steuercode eingebettete Dokumentation umfasst, die basierend auf dem Text des Dokuments generiert wurde,
Übersetzen, unter Verwendung des generativen Kl-Modells (226) eines in dem Code-Repository (306) gespeicherten Steuercode-Beispiels in ein textbasiertes Funktionsspezifikationsdokument, das eine Funktion des Steuercode-Beispiels beschreibt, und
Speichern des textbasierten Funktionsspezifikationsdokuments in dem Dokumenten-Repository (304).

13. Nicht transitorisches computerlesbares Medium nach Anspruch 12, wobei die in dem Dokumenten-Repository (304) gespeicherten Dokumente mindestens eines von industriellen Programmierhandbüchern, Handbüchern für industrielle Vorrichtungen oder Funktionsspezifikationsdokumenten umfassen.

## Revendications

1. Système (202), comprenant :
une mémoire (220) qui stocke des composants exécutables et un modèle d'intelligence artificielle, IA, générative (226) ; et
un processeur (218), couplé de manière fonctionnelle à la mémoire (220), qui exécute les composants exécutables, les composants exécutables comprenant :
un composant d'interface utilisateur (204) configuré pour recevoir, en tant qu'entrée en langage naturel, une invite (512) spécifiant des exigences de conception de code de commande industrielle ; et
un composant IA (210) configuré pour :
générer, en utilisant le modèle d'IA générative (226), un code de commande industrielle destiné à satisfaire les exigences de conception de code de commande industrielle sur la base d'une analyse de l'invite (512), d'un code de commande d'échantillon stocké dans un référentiel de code (306) et de documents textuels stockés dans un référentiel de documents (304),
générer, sur la base d'une analyse en utilisant le modèle d'IA générative (226) du texte contenu dans un document de spécification fonctionnelle stocké dans le référentiel de documents (304), un code de commande documenté apte à effectuer une fonction de commande définie dans la spécification fonctionnelle, le code de commande documenté comprenant une documentation intégrée générée sur la base du texte du document de spécification fonctionnelle,
stocker le code de commande documenté dans le référentiel de code (306),
générer, sur la base d'une analyse en utilisant le modèle d'IA générative (226) d'un échantillon de code de commande stocké dans le référentiel de code (306), un document de spécification fonctionnelle textuel décrivant une fonction de l'échantillon de code de commande, et
stocker le document de spécification fonctionnelle textuel dans le référentiel de documents (304),
dans lequel le composant IA (210) est en outre configuré pour intégrer une documentation fonctionnelle dans le code de commande industrielle sur la base de l'invite (512), des documents textuels et des échantillons de code de commande.

2. Système (202) selon la revendication 1, dans lequel les documents stockés dans le référentiel de documents (304) comprennent au moins l'un parmi des manuels de programmation industrielle, des manuels de dispositifs industriels ou des documents de spécification fonctionnelle.

3. Système (202) selon l'une des revendications 1 ou 2, dans lequel le composant IA (210) est en outre configuré pour stocker le code de commande industrielle dans le référentiel de code (306), pour stocker la documentation fonctionnelle dans le référentiel de documents (304), et pour créer un lien entre le code de commande industrielle et la documentation fonctionnelle.

4. Système (202) selon l'une des revendications 1 à 3, dans lequel le code de commande d'échantillon stocké sur le référentiel de code (306) comprend au moins l'un parmi un code de commande fourni par un fournisseur de dispositifs ou de logiciels, des échantillons de code de commande spécifiques à un client, ou des instructions additionnelles.

5. Système (202) selon l'une des revendications 1 à 4, dans lequel
le composant IA (210) est configuré pour générer le code de commande industrielle dans un format spécifié comme faisant partie de l'invite (512), et
le format est au moins l'une parmi une routine en logique ladder, une routine en texte structuré ou une instruction additionnelle.

6. Système (202) selon l'une des revendications 1 à 5, dans lequel le composant IA (210) est en outre configuré pour
établir de multiples ensembles de valeurs d'hyperparamètres pour le modèle d'IA générative (226),
générer, en utilisant le modèle d'IA générative (226), de multiples versions du code de commande industrielle en utilisant les multiples ensembles de valeurs d'hyperparamètres respectifs pour le modèle d'IA générative (226), et
en réponse à la réception d'une sélection d'une version du code de commande industrielle, parmi les multiples versions du code de commande industrielle, stocker l'un des ensembles de valeurs des hyperparamètres correspondant à la version du code de commande industrielle dans un référentiel d'invites (308), et/ou
dans lequel le composant IA est en outre configuré pour, en réponse à la réception de la sélection de la version du code de commande industrielle :
établir de multiples ensembles de nouvelles valeurs des hyperparamètres sur la base de l'un des ensembles de valeurs des hyperparamètres correspondant à la version du code de commande industrielle, et
générer, en utilisant le modèle d'IA générative (226) et sur la base de la version du code de commande industrielle, de multiples nouvelles versions du code de commande industrielle en utilisant les multiples nouveaux ensembles de valeurs d'hyperparamètres respectifs pour le modèle d'IA générative (226).

7. Système (202) selon l'une des revendications 1 à 6, dans lequel
le composant d'interface utilisateur (204) est configuré pour afficher une interface utilisateur configurée pour recevoir l'invite (512),
en réponse à une sélection, via une interaction avec l'interface utilisateur, d'un type de sortie à générer, le composant d'interface utilisateur (204) affiche une ou plusieurs questions pertinentes pour le type de sortie, et
l'invite (512) comprend des réponses aux questions soumises via une interaction avec l'interface utilisateur, et/ou
dans lequel le type de sortie est au moins l'une parmi une routine ou une instruction additionnelle.

8. Procédé, comprenant :
la réception, par un système (202) d'environnement de développement intégré, IDE, industriel comprenant un processeur (218), d'une invite (512) demandant un code de commande industrielle qui effectue une fonction de commande spécifiée, dans lequel l'invite (512) est formatée comme une entrée en langage naturel ;
la génération, par le système IDE industriel (202) en utilisant un modèle d'intelligence artificielle, IA, générative (226), du code de commande industrielle sur la base d'une analyse de l'invite (512), d'un code de commande d'échantillon stocké dans un référentiel de code (306) et de documents textuels stockés dans un référentiel de documents (304) ;
la traduction, par le système IDE industriel (202) en utilisant le modèle d'IA générative (226), du texte d'un document contenu dans le référentiel de documents (304) en un code de commande documenté apte à effectuer une fonction de commande définie dans le document ;
le stockage du code de commande documenté dans le référentiel de code (306),
dans lequel le code de commande documenté comprend une documentation intégrée générée sur la base du texte du document,
la traduction, par le système IDE industriel (202) en utilisant le modèle d'IA générative (226), d'un échantillon de code de commande stocké dans le référentiel de code (306) en un document de spécification fonctionnelle textuel décrivant une fonction de l'échantillon de code de commande ; et
le stockage, par le système IDE industriel (202), du document de spécification fonctionnelle textuel dans le référentiel de documents (304).

9. Procédé selon la revendication 8, dans lequel les documents stockés dans le référentiel de documents (304) comprennent au moins l'un parmi des manuels de programmation industrielle, des manuels de dispositifs industriels ou des documents de spécification fonctionnelle.

10. Procédé selon la revendication 8, dans lequel le code de commande d'échantillon stocké dans le référentiel de code (306) comprend au moins l'un parmi un code de commande fourni par un fournisseur de dispositifs ou de logiciels, des échantillons de code de commande spécifiques à un client, ou des instructions additionnelles, et/ou
dans lequel
la réception comprend la réception, comme faisant partie de l'invite (512), d'une indication d'un format demandé pour le code de commande industrielle,
la génération comprend la génération du code de commande industrielle dans le format spécifié comme faisant partie de l'invite (512), et
le format est au moins l'une parmi une routine en logique ladder, une routine en texte structuré ou une instruction additionnelle.

11. Procédé selon l'une des revendications 8 à 10, comprenant en outre :
l'établissement, par le système IDE industriel (202), de multiples ensembles de valeurs d'hyperparamètres pour le modèle d'IA générative (226),
la génération, par le système IDE industriel (202) en utilisant le modèle d'IA générative (226), de multiples versions du code de commande industrielle en utilisant les multiples ensembles de valeurs d'hyperparamètres respectifs pour le modèle d'IA générative (226), et
en réponse à la réception d'une sélection d'une version du code de commande industrielle parmi les multiples versions du code de commande industrielle, le stockage, par le système IDE industriel (202), de l'un des ensembles de valeurs des hyperparamètres correspondant à la version du code de commande industrielle dans un référentiel d'invites (308).

12. Support non transitoire lisible par ordinateur sur lequel sont stockées des instructions qui, en réponse à l'exécution, amènent un système d'environnement de développement intégré (IDE) industriel (202) comprenant un processeur (218) à effectuer des opérations, les opérations comprenant :
recevoir une invite (512) demandant un code de commande industrielle qui effectue une fonction de commande spécifiée, dans lequel l'invite (512) est formatée comme une entrée en langage naturel ; et
générer, en utilisant un modèle d'intelligence artificielle, IA, générative (226), le code de commande industrielle sur la base d'une analyse de l'invite (512), d'un code de commande d'échantillon stocké dans un référentiel de code (306) et de documents textuels stockés dans un référentiel de documents (304) ;
traduire, en utilisant le modèle d'IA générative (226), le texte d'un document contenu dans le référentiel de documents (304) en un code de commande documenté apte à effectuer une fonction de commande définie dans le document ;
stocker le code de commande documenté dans le référentiel de code (306),
dans lequel le code de commande documenté comprend une documentation intégrée générée sur la base du texte du document,
traduire, en utilisant le modèle d'IA générative (226), un échantillon de code de commande stocké dans le référentiel de code (306) en un document de spécification fonctionnelle textuel décrivant une fonction de l'échantillon de code de commande ; et
stocker le document de spécification fonctionnelle textuel dans le référentiel de documents (304).

13. Support non transitoire lisible par ordinateur selon la revendication 12, dans lequel les documents stockés dans le référentiel de documents (304) comprennent au moins l'un parmi des manuels de programmation industrielle, des manuels de dispositifs industriels ou des documents de spécification fonctionnelle.
